# FASCICULE DE BREVET EUROPEEN

(11) **EP 1 702 149 B1**
(45) Date de publication et mention de la délivrance du brevet: **02.01.2013**
(21) Numéro de dépôt: 04816374.5
(22) Date de dépôt: 13.12.2004
(51) Int. Cl.: F01P 7/16

(54) **PROCEDE DE REGULATION THERMIQUE D’UN CIRCUIT DE CIRCULATION DE FLUIDE EN PARTICULIER POUR UN CIRCUIT DE REFROIDISSEMENT D’UN MOTEUR**
VERFAHREN ZUR TEMPERATURREGELUNG EINES FLUIDSTROMKREISES, INSBESONDERE FÜR EINEN MOTORKÜHLKREISLAUF
METHOD FOR TEMPERATURE CONTROL OF A FLUID FLOW CIRCUIT IN PARTICULAR FOR AN ENGINE COOLING CIRCUIT

(30) Priorité: 12.12.2003 FR 0314609
(43) Date de publication de la demande: 20.09.2006
(73) Titulaire: VALEO SYSTEMES THERMIQUES, 78320 Le Mesnil Saint-Denis (FR)
(72) Inventeur: CHANFREAU, Mathieu, F-78650 Saulx Marchais (FR); VACCA, Frédéric, F-78910 Behoust (FR); FARKH, Alain, F-78490 Montfort l'Amaury (FR)
(74) Mandataire: Rolland, Jean-Christophe
(86) Numéro de dépôt international: PCT/FR2004/003201
(87) Numéro de publication internationale: WO 2005/061867

(56) Documents cités:
- WO-A-03/006857
- DE-A- 4 226 531
- US-A- 4 344 564

## Description

L'invention se rapporte à un procédé de commande d'un circuit de refroidissement d'un moteur.

Elle s'applique notamment à la réalisation d'un circuit de refroidissement d'un moteur thermique de véhicule automobile.

Un tel circuit de refroidissement est parcouru par un fluide de refroidissement, habituellement de l'eau additionnée d'un antigel, qui circule en circuit fermé sous l'action d'une pompe de circulation.

Généralement, un tel circuit de refroidissement comprend plusieurs branches, dont une branche qui contient un radiateur de refroidissement, une branche qui constitue une dérivation du radiateur de refroidissement et une branche qui contient un radiateur appelé "aérotherme", servant au chauffage de l'habitacle.

Il est connu d'utiliser une vanne thermostatique qui comprend une entrée de fluide reliée à la sortie du moteur et deux sorties de fluide qui correspondent respectivement à la branche contenant le radiateur de refroidissement et à la branche formant dérivation.

Lors du démarrage à froid du moteur, et tant que la température du fluide de refroidissement n'atteint pas un certain seuil, la vanne fait circuler le fluide de refroidissement dans une branche de dérivation en mettant en court-circuit le radiateur de refroidissement. Dès que la température du fluide de refroidissement atteint et dépasse le seuil précité, le fluide de refroidissement traverse le radiateur de refroidissement et contourne la branche de dérivation.

Généralement, le fluide de refroidissement circule en permanence dans la branche qui contient le radiateur de chauffage, le chauffage de l'habitacle étant alors obtenu par mixage d'un flux d'air froid et d'un flux d'air chaud qui a balayé le radiateur de chauffage. Il est connu aussi de prévoir une vanne séparée sur le radiateur de chauffage pour régler le débit de fluide de refroidissement qui le traverse.

Les vannes généralement utilisées pour cette application sont du type à boisseau. Mais outre le fait que leur encombrement est important, elles ne permettent pas de garantir une fiabilité acceptable durant toute la vie du véhicule.

Ainsi, les procédés de refroidissement connus nécessitent des moyens complexes pour commander la distribution du fluide de refroidissement entre les trois branches précitées, en fonction des conditions de fonctionnement du moteur et des conditions de confort souhaitées par le ou les occupants du véhicule.

D'autre part, ces procédés ne permettent pas d'obtenir lors des démarrages à froid du moteur une montée en température rapide de la matière entourant les cylindres qui aurait pour avantage d'assurer un meilleur mélange des gaz avec le carburant pour obtenir un taux d'émission des gaz brûlés réduit avant que le pot catalytique ne soit efficace.

Lors du démarrage à froid du moteur, les procédés connus opèrent une réduction du débit du fluide de refroidissement, cette réduction de débit étant contrôlée par des thermostats. Mais cette réduction de débit n' est pas suffisante pour permettre une montée en température rapide du moteur. Selon d'autres procédés connus, la réduction de débit est réalisée en fermant l'entrée de la vanne, ce qui supprime de ce fait toute circulation du fluide de refroidissement et favorise une montée en température rapide du moteur. Cependant la mise en oeuvre de ces procédés nécessite l'utilisation d'un moteur supplémentaire dont le couple moteur est relativement important pour pouvoir entraîner le dispositif de fermeture de l'entrée de la vanne.

*Le document* WO 03/006857 *montre un circuit de refroidissement d'un moteur thermique de véhicule automobile avec une vanne pour régler le débit du fluide de refroidissement.*

L'un des buts de l'invention est de procurer un procédé de commande de la vanne du circuit de refroidissement permettant de bloquer le débit pendant la montée en température du moteur jusqu'à un certain niveau de régime moteur, et donc de pression de la pompe de circulation, pour accélérer la montée en température de la matière autour des cylindres du moteur afin de garantir un meilleur mélange et moins d'émissions d'hydrocarbures et de monoxyde de carbone avant que le pot catalytique ne soit efficace et une consommation moindre de carburant.

Un autre but de l'invention est de permettre de gérer de façon indépendante les débits du fluide de refroidissement dans les différentes branches du circuit de refroidissement du moteur et d'assurer un débit nul dans les différentes branches du dispositif de refroidissement, ne nécessitant pas l'usage d'un moteur supplémentaire autre que celui assurant la rotation de l'organe de réglage dans le corps de vanne, pour permettre une montée rapide en température lors des démarrages à froid du moteur.

L'invention vise aussi à procurer un procédé qui permet d'optimiser et d'améliorer les différentes fonctions, notamment lors de la montée en température du moteur thermique, lorsqu'un chauffage de l'habitacle est souhaité, et aussi en cas de surchauffe du moteur.

Pour réaliser ces objectifs, le procédé selon l'invention consiste à commander la vanne suivant un nombre déterminé de phases de commandes réparties entre au moins deux modes de commande, un mode de commande de refroidissement du moteur sans chauffage de l'habitacle et un mode de commande de refroidissement du moteur avec chauffage de l'habitacle et à commander la vanne suivant au moins un troisième mode de commande qui est établi lors du démarrage à froid du moteur et pour lequel la circulation du fluide de refroidissement dans la vanne est coupée.

Afin de faciliter l'ouverture de la vanne lorsque la circulation du fluide de refroidissement est coupée, et par conséquent diminuer le couple d'entraînement du moteur de la vanne, le procédé consiste, dans le troisième mode de commande, à limiter la pression exercée par la pompe à eau dans le corps de la vanne, en libérant un clapet qui met en communication l'intérieur du corps de la vanne avec la branche dérivation.

Selon l'invention, les phases de commande sont déterminées par des secteurs angulaires adjacents les uns aux autres et disposés entre une première et une deuxième position angulaire d'extrémité de l'organe de réglage dans le corps de la vanne. Le mode de commande de refroidissement sans chauffage comprend une première phase de régulation du débit du fluide de refroidissement dans le radiateur et le mode de commande de refroidissement avec chauffage comprend une deuxième phase de régulation du débit du fluide de refroidissement dans le radiateur dont les secteurs angulaires sont adjacents respectivement à la première et à la deuxième position angulaire d'extrémité de l'organe de réglage.

Selon une autre caractéristique, le procédé selon l'invention est apte à amener l'organe de réglage de la vanne dans une position de sécurité selon laquelle tout le débit du fluide de refroidissement dans le corps de vanne circule dans le radiateur et éventuellement dans l'aérotherme.

Dans un premier exemple de mise en oeuvre du procédé, le troisième mode de commande positionne l'organe de réglage de la vanne à un angle d'ouverture intermédiaire entre les secteurs angulaires des première et deuxième phases de régulation du débit de fluide de refroidissement dans le radiateur et la position de sécurité est placée à une extrémité de l'excursion angulaire de l'organe de réglage. Cette disposition est particulièrement avantageuse car elle permet d'optimiser la vanne notamment en terme de compacité.

Selon une deuxième et une troisième variantes de mise en oeuvre du procédé, le troisième mode de commande positionne l'organe de réglage à une extrémité de l'excursion angulaire de la vanne et la position de sécurité est placée soit dans une position intermédiaire entre les positions correspondant aux phases de régulation sans chauffage et avec chauffage ou à l'extrémité opposée de l'excursion angulaire de la vanne opposée à celle occupée dans le troisième mode de commande.

Selon une autre caractéristique du procédé selon l'invention la vanne est commandée,
soit dans le premier mode dans l'une des positions: "dérivation", "radiateur + dérivation", "radiateur",
soit dans le deuxième mode dans l'une des positions: "radiateur + aérotherme", "radiateur + dérivation + aérotherme", "aérotherme + dérivation", "aérotherme" lorsqu'un mode avec chauffage est désiré.

Selon une autre caractéristique importante de l'invention, le procédé ferme la vanne lors du démarrage à froid du moteur de façon à limiter le débit dans le bloc moteur à un débit pratiquement nul et à rétablir le débit dans le bloc moteur et dans la branche "dérivation" lorsque la charge ou le régime moteur ou la température du liquide de refroidissement dépassent respectivement des valeurs de seuil déterminées.

Dans le premier mode "sans chauffage", le procédé dirige après la phase de démarrage à froid du moteur tout le débit de fluide traversant le moteur dans la branche "dérivation" jusqu'à ce que la température de refroidissement atteigne une valeur de seuil de température déterminée TS 1 comprise à l'intérieur d'une fourchette de température de valeur déterminée, puis lorsque la température du fluide de refroidissement atteint une deuxième valeur de seuil déterminée Tw inférieure à une température de consigne Tc, le procédé consiste à diriger le fluide de refroidissement dans la branche "radiateur", puis à asservir la température du liquide de refroidissement sur la température de consigne Tc lorsque la température du fluide de refroidissement atteint la température de consigne.

Dans le deuxième mode avec chauffage, le procédé dirige après la phase de démarrage à froid du moteur, le liquide de refroidissement dans l'aérotherme lorsque le régime du moteur est en dessous d'une valeur de seuil déterminée RPM1 jusqu'à ce que la température du liquide de refroidissement atteigne une valeur de seuil Ts1 comprise à l'intérieur d'une fourchette de valeurs de température déterminées, puis lorsque la température du fluide de refroidissement atteint une deuxième valeur de seuil de température déterminée TW inférieure à une température de consigne Tc, le procédé consiste à diriger le fluide de refroidissement dans la branche "radiateur", puis à asservir la température du liquide de refroidissement sur la température de consigne Tc lorsque la température du liquide de refroidissement atteint la température de consigne Tc.

Lorsque le régime du moteur est au dessus de la valeur de seuil déterminée RPM1 le débit du liquide de refroidissement dans la branche aérotherme est écrêté et le reste du débit est envoyé dans la branche "dérivation".

Lorsque le régime moteur RPM est supérieur à un deuxième seuil de valeur déterminée RPM2 lui même supérieur au premier seuil RPM1 et lorsque la température du liquide de refroidissement atteint une valeur Ts1 comprise à l'intérieur d'une fourchette de valeurs de température déterminées, puis lorsque la température du fluide de refroidissement atteint une deuxième valeur de seuil de température déterminée TW inférieur à une température de consigne Tc, le fluide de refroidissement est dirigé dans la branche "radiateur" puis la température du liquide de refroidissement est asservie sur la température de consigne Tc lorsque la température du liquide de refroidissement atteint la température de consigne Tc.

La vanne selon l'invention comprend un corps muni d'une entrée de fluide et d'au moins deux sorties de fluide, et un organe de réglage propre à tourner autour d'un axe de rotation et à prendre différentes positions angulaires à l'intérieur d'un logement cylindrique du corps de vanne pour contrôler la distribution du fluide au travers des sorties.

Selon un mode particulier de réalisation la vanne comprend un segment d'étanchéité entraîné en rotation par l'organe de réglage et coopérant avec l'organe de réglage pour répartir sélectivement le débit de fluide dans l'ensemble des sorties de fluide. Pour permettre une montée en température rapide du moteur sans risque de détérioration de celui-ci lors d'un démarrage à froid, une des sorties de fluide est reliée à une tubulure de sortie de fluide coopérant avec un limiteur de pression pour interdire tout débit de fluide dans ladite tubulure de sortie lorsque, les sorties restantes de la vanne étant fermées par le segment d'étanchéité, la pression à l'intérieur du corps de la vanne est inférieure à une valeur de seuil déterminée et pour autoriser un débit de fluide dans la dite tubulure de sortie de fluide au travers du segment d'étanchéité lorsque, les sorties de fluide restantes étant fermées par le segment d'étanchéité, la pression du fluide à l'intérieur du corps de vanne excède une valeur de seuil prédéterminée.

Selon encore une autre caractéristique de l'invention, la vanne de commande comprend des moyens de motorisation propres à entraîner l'organe de réglage pour l'amener dans des positions angulaires choisies par rapport au corps de vanne. Ces moyens de motorisation peuvent comprendre, par exemple, un moteur du type pas à pas ou à courant continu ou sans balais.

Dans une application préférentielle de l'invention, la vanne est spécialement conçue pour être incorporée dans le circuit de refroidissement d'un moteur thermique de véhicule automobile, le circuit étant composé principalement d'un radiateur, d'un aérotherme et d'un circuit de dérivation. A cette fin la vanne comprend d'une part, une entrée de fluide reliée à une arrivée de fluide de refroidissement en provenance du moteur, et d'autre part, une première, deuxième et troisième sorties de fluide reliées respectivement à une première branche qui contient le radiateur de refroidissement du moteur, une deuxième branche qui constitue une dérivation du radiateur de refroidissement du moteur, et une troisième branche qui contient un aérotherme pour le chauffage de l'habitacle.

Dans cette application l'organe de réglage est propre à prendre successivement au moins les positions suivantes, lorsqu'il est entraîné en rotation dans un sens donné:
- une position "radiateur", en laquelle la deuxième tubulure de sortie est ouverte;
- une position "radiateur + dérivation", en laquelle la première tubulure de sortie et la deuxième tubulure de sortie sont ouvertes;
- une position "dérivation", en laquelle la première tubulure de sortie est ouverte;
- une position "débit nul", en laquelle aucune tubulure de sortie n'est ouverte;
- une position "aérotherme", en laquelle la troisième tubulure de sortie est ouverte;
- une position "aérotherme + dérivation", en laquelle la première tubulure de sortie et la troisième tubulure de sortie sont ouvertes;
- une position "radiateur + dérivation + aérotherme", en laquelle la première tubulure de sortie, la deuxième tubulure de sortie et la troisième tubulure de sortie sont ouvertes;
- une position "radiateur + aérotherme", en laquelle la deuxième tubulure de sortie et la troisième tubulure de sortie sont ouvertes.

Les positions indiquées précédemment correspondent à celles que l'on retrouve en séquence, lorsque l'on fait tourner l'organe de réglage dans le corps de vanne, dans un sens donné.

Cependant il doit être compris que l'organe de réglage peut être amené directement dans l'une des positions précédentes en fonction d'un mode particulier souhaité.

Avantageusement, l'organe de réglage est propre à prendre, en outre, une position "sécurité" qui correspond soit à la position "radiateur", en laquelle la deuxième sortie est ouverte, soit à la position "radiateur + aérotherme", en laquelle la deuxième sortie et la troisième sortie sont ouvertes.

Ces positions de sécurité favorisent le refroidissement du moteur en permettant de dissiper la chaleur du moteur, soit au travers du radiateur seul, soit au travers du radiateur et de l'aérotherme.

Dans la description qui suit, faite seulement à titre d'exemple, on se réfère aux dessins annexés, sur lesquels:
- la Figure 1 est un schéma d'un circuit de refroidissement d'un moteur thermique de véhicule automobile, équipé d'une vanne de commande selon l'invention;
- les Figures 2, 3, et 4 sont des courbes de débit dans les différentes branches du circuit de refroidissement suivant trois exemple de mise en oeuvre du procédé selon l'invention;
- la Figure 5 est une vue en perspective éclatée d'une vanne de commande selon un premier mode de réalisation de l'invention;
- les Figures 6A et 6B sont deux vues en perspective du segment d'étanchéité de la vanne représentée à la Figure 1;
- les Figures 7 à 10 sont des vues en coupe d'un mode de réalisation d'une vanne équipée d'un limiteur de pression pour la mise en oeuvre du procédé selon l'invention;
- les figures 11, 12, 13 sont des graphiques représentant des courbes de débit dans les sorties d'une vanne du type de celle représentée à la Figure 5, en fonction de différentes positions de l'organe de réglage de la vanne et pour des configurations différentes des orifices de communication de l'organe de réglage dans le corps de vanne; et
- la Figure 14 est un organigramme illustrant le fonctionnement de la vanne selon l'invention.

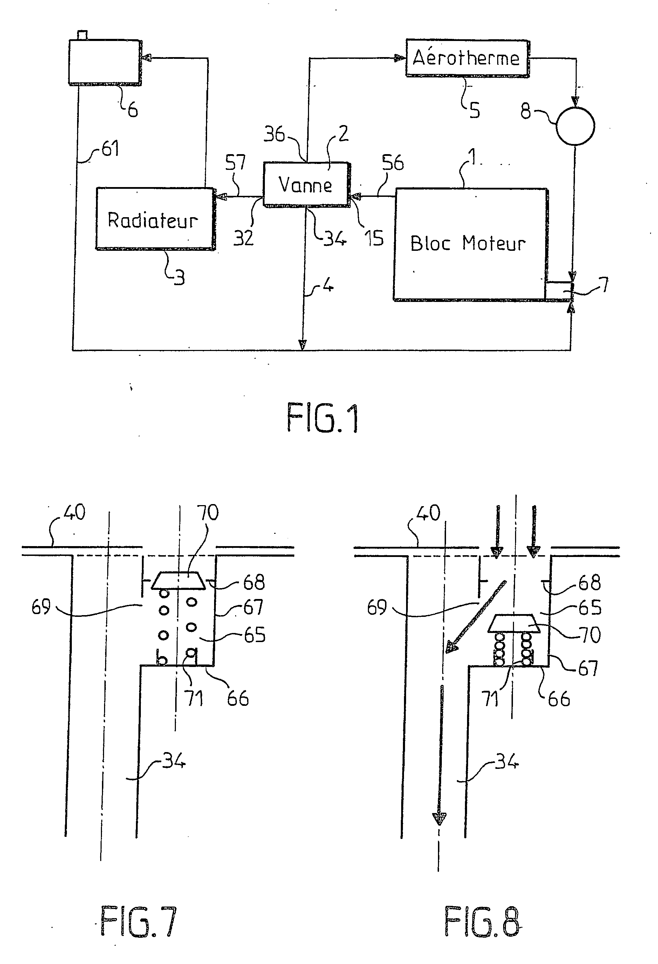

Le procédé selon l'invention se rapporte à la commande d'un circuit de refroidissement d'un moteur 1 de véhicule automobile du type comportant, de la façon représentée à la Figure 1, une vanne de commande à boisseau rotative 2 dont l'entrée de fluide est reliée à une arrivée de fluide en provenance du moteur 1 et dont les sorties de fluide sont reliées respectivement à un radiateur de refroidissement 3, à une branche de dérivation 4 du radiateur de refroidissement 3 et à un aérotherme 5 pour le chauffage de l'habitacle du véhicule. Le circuit comprend également un vase d'expansion 6 et une pompe à eau 7 qui assure la circulation du fluide de refroidissement. Eventuellement le circuit peut être complété par une pompe additionnelle 8.

Le procédé permet tout à la fois de répartir le débit dans les différentes sorties de la vanne 2 et de bloquer le débit dans ses sorties pendant la montée en température du moteur 1 jusqu'à un certain niveau de régime moteur et donc de pression de la pompe à eau 7 pour accélérer la montée en température de la matière autour des cylindres du moteur 1 afin de garantir un meilleur mélange et moins d'émissions d'hydrocarbures et de monoxyde de carbone avant que le pot catalytique ne soit efficace et une consommation moindre de carburant.

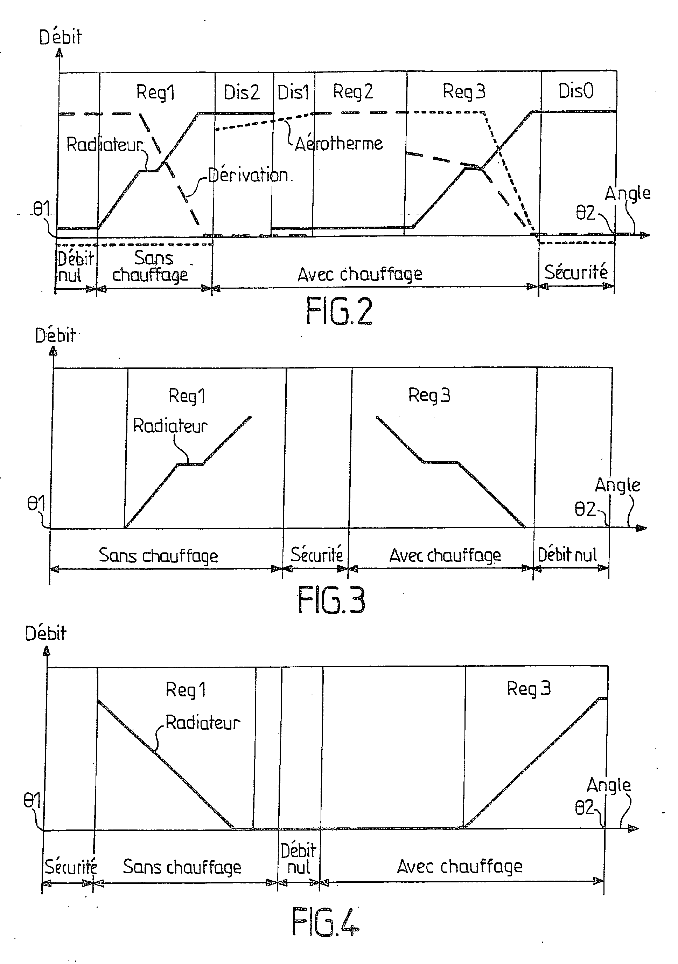

Selon un mode de fonctionnement commun aux Figures 2, 3, et 4, le procédé selon l'invention consiste à commander la vanne 2 entre un premier angle d'extrémité 0 et un deuxième angle d'extrémité θ2, suivant au moins deux modes de commande, un mode de commande Reg1 du refroidissement du moteur 1 sans chauffage de l'habitacle et un mode de commande Reg2 du refroidissement du moteur 1 avec chauffage de l'habitacle, et à commander la vanne suivant au moins un troisième mode qui est établi lors du démarrage à froid du moteur et pour lequel la circulation du fluide dans la vanne est coupée.

La distribution du fluide de refroidissement qui a lieu entre d'une part le moteur 1, et d'autre part le radiateur de refroidissement 3, la branche de dérivation du radiateur de refroidissement 4 et l'aérotherme 5 s'effectue suivant plusieurs phases nommées "Position 0 débit", "Reg1", "Dis 0", "Reg2", "Dis1", "Reg3", "Dis2" correspondant à des secteurs angulaires adjacents les uns aux autres disposés entre les angles d'extrémités θ1 et θ2. Ces phases sont répertoriées dans le "Tableau 1" figuré en annexe.

Dans la phase "Position 0 débit" toutes les sorties de la vanne 2 sont fermées. Dans cette position le débit dans chacune des sorties de la vanne 2 est très faible de l'ordre par exemple 0 à 5 l/h.

La phase Reg1 est une phase de régulation sans chauffage au cours de laquelle les débits dans le radiateur 3 et la branche de dérivation 4 sont évolutifs entre le début et la fin de la période de régulation et le débit dans l'aérotherme 5 est nul aux fuites près. Le fluide de refroidissement circule uniquement dans la branche de dérivation 4 en début de période et circule uniquement dans le radiateur 3 en fin de période, ce qui place le moteur 1 dans un état de surchauffe en début de période et dans un état de sécurité en fin de période.

La phase Dis0 place la vanne 2 dans une position de sécurité. Dans cette phase le débit du fluide de refroidissement a lieu principalement dans le radiateur 3 mais peut aussi avoir lieu dans l'aérotherme 5.

La phase Reg2 est une phase de démarrage à froid avec chauffage à haut régime moteur. Dans cette phase la circulation du fluide de refroidissement a lieu principalement dans la branche de dérivation 4 où il est constant de l'ordre de 2000l/h du début jusqu'à la fin de cette phase et présente un débit plus faible dans l'aérotherme 5.

La phase Dis1 est une phase de démarrage à froid du moteur 1 avec chauffage de l'habitacle. Dans cette phase seul l'aérotherme est alimenté par le fluide de refroidissement.

La phase Reg3 est une phase de régulation avec chauffage. Dans cette phase le débit du fluide de refroidissement passe progressivement d'une valeur pratiquement nulle en début de phase à un débit maximum dans le radiateur 3 en fin de phase. Il passe par contre dans l'aérotherme 5 d'une valeur de débit maximum en début de phase à une valeur plus faible de l'ordre de 20% en fin de phase. Il est dans la branche de dérivation à 50% de sa valeur normale en début de phase pour chuter à un débit nul en fin de phase.

La phase Dis2 correspond à une phase de refroidissement du moteur 1 à l'arrêt qui n'a lieu seulement dans le cas où le circuit de refroidissement dispose d'une pompe supplémentaire. Dans cette phase le fluide de refroidissement circule à la fois dans le radiateur 3 et l'aérotherme 5.

Pour réaliser cette distribution plusieurs modes de séquencement de la vanne sont possibles.

Dans l'exemple de la Figure 2, les phases "débit nul" et "sécurité" sont situées respectivement aux extrémités de l'excursion angulaire de la vanne 2 et les phases intermédiaires Reg1, Dis2, Dis1, Reg2, Reg3 se suivent dans cet ordre en des emplacements angulaires se suivant depuis l'emplacement correspondant à la phase "débit nul".

L'évolution dans les phases Reg1 et Reg3 du débit du fluide de refroidissement dans le radiateur en fonction de l'angle de rotation de la vanne suit des courbes croissantes parallèles. Le débit dans le radiateur de refroidissement est respectivement minimum au début des phases Reg1 et Reg3 et est respectivement maximum en fin de la phase.

Dans l'exemple de la Figure 3, la phase "débit nul" est située à l'extrémité de l'excursion angulaire de la vanne 2 et la phase "sécurité" est située entre les phases Reg1 et Reg3. L'évolution dans les phases Reg1 et Reg3 du débit du fluide de refroidissement dans le radiateur en fonction de l'angle de rotation de la vanne suit des courbes de débit respectivement croissante et décroissante, le débit dans le radiateur de refroidissement étant respectivement minimum en début de la phase Reg1 et en fin de la phase Reg3. Les phases intermédiaires ne sont pas représentées mais elles se déduisent facilement du tableau 1 figuré en annexe.

Dans l'exemple de la Figure 4, la phase "débit nul" est située entre les phases Reg1 et Reg3 et la phase sécurité est située au début de l'excursion angulaire. L'évolution dans les phases Reg1 et Reg3 du débit du fluide de refroidissement dans le radiateur en fonction de l'angle de rotation de la vanne suit des courbes de débit respectivement décroissante et croissante, le débit dans le radiateur de refroidissement étant minimum respectivement en fin de la phase Reg1 et en début de la phase Reg3. Comme précédemment, les phases intermédiaires ne sont pas représentées mais elles se déduisent facilement du tableau 1 figuré en annexe.

Sur les diagrammes des figures 2 à 4, la phase "débit nul" a été matérialisée par un intervalle angulaire pour faciliter la lecture des dessins. Cependant, en réalité, cette phase correspond à une valeur angulaire donnée.

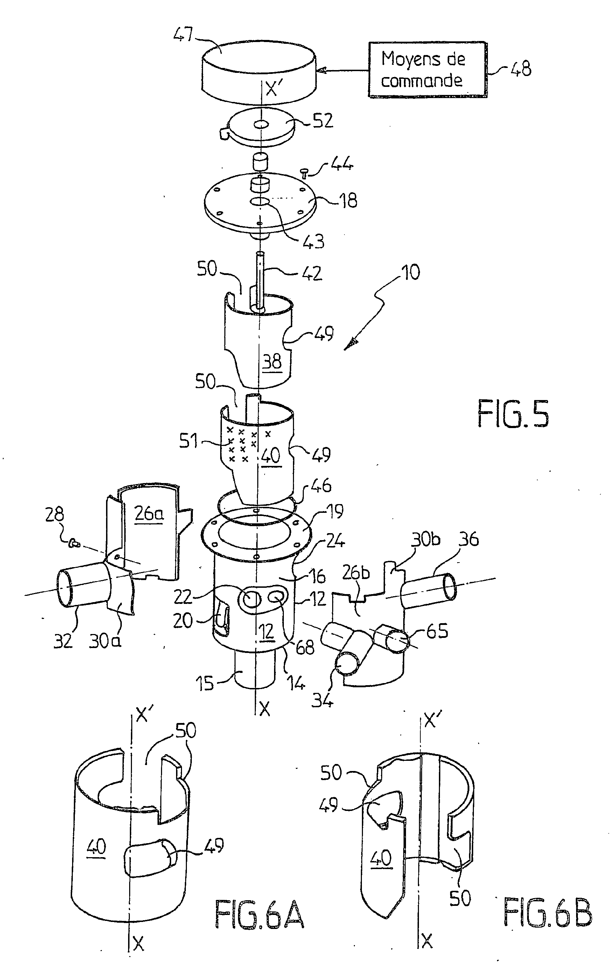

Pour la mise en oeuvre du procédé qui vient d'être décrit, la vanne de commande 2 qui est montrée à la Figure 5 comprend un premier corps cylindrique 12, limité par une paroi de fond 14 et une paroi cylindrique latérale 16 d'axe longitudinal XX'. La paroi de fond 14 comporte un orifice alimenté par une tubulure d'entrée de fluide 15. Le corps cylindrique 12 est fermé à son extrémité opposée à la paroi de fond 14 par un couvercle 18 en appui sur une collerette 19 en saillie à cette extrémité sur le corps cylindrique 12. La paroi cylindrique latérale 16 est traversée par des orifices de sortie 20, 22, 24 disposés à des hauteurs axiales et en des positions angulaires choisies par rapport à l'axe de rotation XX'.

Pour des commodités de réalisation le corps cylindrique 12 est enserré à l'intérieur d'un deuxième corps cylindrique 26 partagé en deux parties 26a et 26b, les deux parties étant fixées l'une à l'autre par des vis de serrage 28. Il est à noter cependant que le corps 26 peut aussi être réalisé en une seule partie. Sur les parois latérales 30a, 30b du deuxième corps cylindrique 26 débouchent trois tubulures 32, 34, 36 qui sont placées en regard des orifices de sortie 20, 22 et 24. Dans la représentation de la figure 5, les tubulures 32 et 36 sont diamétralement opposées, tandis que la tubulure 34 forme un angle de 90 degrés par rapport à l'axe commun des tubulures 32 et 36. Cependant des modes de réalisations comportant des angles différents sont aussi possibles. Par ailleurs, les tubulures 32, 34 et 36 ont des diamètres successivement décroissants mais d'autres configurations sont également possibles dépendant des applications envisagées.

A l'intérieur du corps de vanne 16 est logé un organe de réglage 38, encore appelé organe tournant, qui est réalisé sous la forme d'un élément cylindrique creux. L'organe de réglage 38 est recouvert d'un segment d'étanchéité 40 réalisé en une matière synthétique souple dont le diamètre extérieur correspond sensiblement au diamètre interne du corps de vanne. L'organe de réglage 38 se prolonge par une tige 42 dirigée suivant l'axe XX'. Cette tige 42 passe au travers d'une ouverture centrale 43 que comporte le couvercle 18. Le couvercle 18 est fixé sur la collerette 19 du corps de vanne par l'intermédiaire de vis de fixation 44,ou éventuellement soudé avec interposition d'un joint d'étanchéité 46. L'organe de réglage 38 est propre à être entraîné en rotation autour de l'axe XX' par des moyens de motorisation 47 commandés par des moyens de commande 48. Les moyens de motorisation 47 peuvent être constitués, par exemple, par un moteur de type pas à pas susceptible d'amener l'organe de réglage 38 dans une multiplicité de positions différentes, soit par incréments successifs, soit de manière continue.

Les parois latérales de l'organe de réglage 38 et du segment d'étanchéité 40 sont traversées par des ouvertures de passage de fluide communes 49, 50 permettant de distribuer le fluide entrant par laparoi de fond au travers des tubulures de sortie 32, 34 et 36. Ces ouvertures sont montrées de façon plus apparentes sur les figures 5a et 5b. D'autre part, la surface externe du segment d'étanchéité est striée par des stries 51 pour diminuer le flottement du segment d'étanchéité 40 sur la paroi interne du corps de vanne 12.

De la sorte, l'organe de réglage 38 permet de contrôler les sorties de fluide 32, 34, et 36 avec une loi définie en fonction de la forme donnée aux ouvertures et de la position angulaire de l'organe de réglage 38 dans le corps de vanne.

Un ressort de rappel 52 en spirale, fixé à la tige, permet de ramener l'organe de réglage dans une position initiale lorsque les moyens de motorisation 47 ne sont pas alimentés.

Suivant un autre mode de réalisation non représenté, le corps cylindrique 12 et les tubulures de sorties 32, 34 et 36 peuvent ne former qu'une seule pièce obtenue par moulage, les tubulures de sortie 32, 34, et 36 apparaissant en saillie à l'extérieur du corps cylindrique 12. Ce mode de réalisation ne nécessite plus l'utilisation d'un deuxième corps cylindrique 26 en deux parties mais complique la réalisation du moule de fonderie.

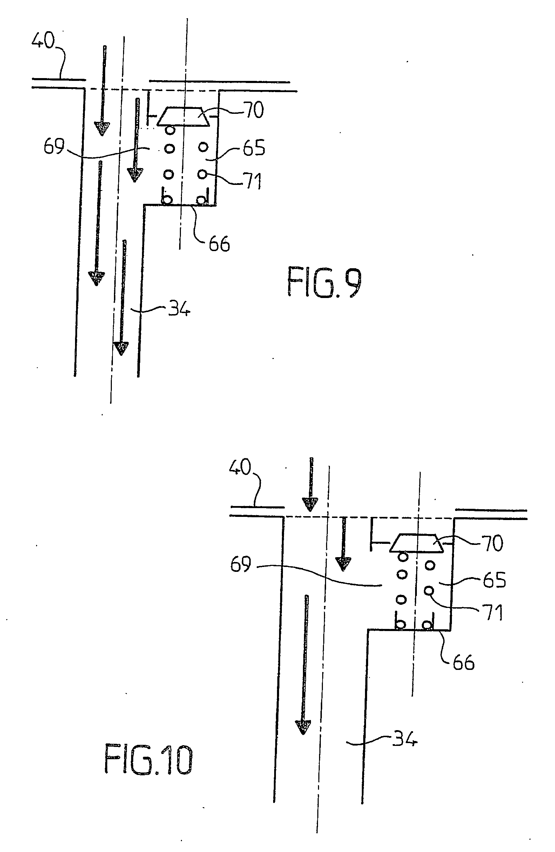

Pour réaliser un débit nul de la vanne 2 par blocage de toutes les sorties, un limiteur de pression mécanique coopère comme illustré aux figures 7 à 10 avec la tubulure de sortie 34 reliant la vanne 2 à la branche "dérivation" 4, ce qui permet d'arrêter le débit à travers le moteur 1. Cette stratégie de "débit nul" peut être interrompue à tout moment ponctuellement ou définitivement, si la charge et/ou le régime du moteur 1 sont trop importants et donc si le moteur 1 nécessite d'être refroidi par exemple pour éviter un point chaud ou ébullition locale dans le moteur. Le débit circule alors dans le moteur 1 et dans la branche "dérivation" 4 uniquement de façon à limiter la quantité de fluide de refroidissement à chauffer. Le limiteur de pression permet également d'éviter une trop forte montée en pression de la pompe 7 qui autrement créerait un couple trop important pour entraîner en rotation l'organe 38.

Selon le mode de réalisation des figures 7 à 10, le limiteur de pression est monté à l'intérieur d'un cavité 65 mettant en communication l'intérieur du corps de vanne avec l'intérieur de la tubulure de sortie 34. La cavité 65 comporte une paroi de fond 66, une paroi latérale 67 et une ouverture d'entrée 68 opposée à la paroi de fond 66. L'ouverture 68 est en communication avec l'intérieur du corps de vanne par l'intermédiaire du segment d'étanchéité 40. La paroi latérale 67 est traversée par une ouverture 69 mettant en communication l'intérieur de la cavité 65 avec l'intérieur de la tubulure de sortie 34. L'ouverture 68 est fermée par un clapet 70 poussé par un ressort 71 en appui sur la paroi de fond 66.

La figure 7 correspond à un bas régime du moteur pour lequel le débit de fluide au travers du bloc moteur 1 est nul et la figure 8 correspond à un régime moteur élevé et un débit de fluide dans le bloc moteur 1 non nul. Dans ces deux configurations le segment d'étanchéité 40 obture totalement l'entrée de la tubulure de sortie 34 et présente par contre une ouverture qui est positionnée en regard de l'ouverture 68 de la cavité 65. A bas régime du moteur, ce qui correspond à la représentation de la figure 7, la pression de fluide exercée à l'intérieur du corps de vanne par la pompe 7 est insuffisante pour désengager le clapet 70 de l'ouverture 68 et aucun fluide ne circule dans la tubulure de sortie 34. A régime du moteur élevé, ce qui correspond à la représentation de la figure 8, la pression de fluide exercée à l'intérieur du corps de vanne par la pompe 55 est suffisante pour désengager le clapet 70 de l'ouverture 68 et permettre au fluide de circuler de l'intérieur du corps de vanne dans la tubulure de sortie 34 au travers de l'ouverture 68.

Dans la configuration de la figure 7 le segment 40 coupe le débit dans le radiateur 3 et l'aérotherme 5. Le débit de la branche "dérivation" 63 est coupé par le limiteur de pression taré par le ressort 71 en appui sur la paroi de fond 66. Toutes les branches étant fermées, il n'y a pas de débit dans le moteur.

Selon la configuration de la figure 8, lorsque le régime moteur augmente, la pompe 7 crée une différence de pression plus importante qui vient pousser sur le ressort 71 et ouvrir le limiteur de pression. Ainsi, le débit commence à circuler dans la branche "dérivation" 4 et dans le bloc moteur 1 garantissant sa sécurité thermique. Il est à remarquer qu'à ce stade l'ouverture de la branche "dérivation" 4 ne nécessite pas la rotation du segment 40. De plus le fait de limiter la pression permet d'éviter que la pression ne monte trop dans le circuit, ce qui évite d'éventuels problèmes de cavitation ou d'autres types d'endommagement de la pompe 7 et des composants du circuit de refroidissement.

Lorsque la phase "démarrage à froid" s'achève, il n'est plus nécessaire d'avoir le débit nul dans le moteur et la branche "dérivation" 4 (figures 7 et 8) est ouverte. Les configurations des figures 7 et 8 correspondent à des positions de la vanne 2 permettant de refroidir le moteur 1 par une circulation du fluide de refroidissement au travers de la branche "dérivation"4 pour un fonctionnement du moteur à faible régime. Pour ce mode de fonctionnement le segment d'étanchéité 40 présente une ouverture qui est positionnée en face de la tubulure de sortie 34 et/ou en face de l'ouverture 68 de la cavité 65.

Si l'organe de réglage 38 est entraîné en rotation dans un sens donné par rapport au corps de la vanne, cet organe peut prendre successivement les positions suivantes:
1- position "radiateur" P9 ou P10, en laquelle la deuxième tubulure de sortie 32 est ouverte;
2- position "radiateur + dérivation" P2 ou P3, en laquelle la première tubulure de sortie 34 et la deuxième tubulure de sortie 32 sont ouvertes;
3- position "dérivation" P1, en laquelle la première tubulure de sortie 34 est ouverte;
4- position P0, en laquelle aucune tubulure de sortie n'est ouverte. Dans cette position dite de "débit nul", le débit moteur maximum toléré dans le moteur est de l'ordre de quelques litres par heure.
5- position "aérotherme" P5' ou P8, en laquelle la troisième tubulure de sortie 36 est ouverte;
6- position "aérotherme + dérivation" P5, en laquelle la première tubulure de sortie 34 et la troisième tubulure de sortie 36 sont ouvertes;
7- position "radiateur + dérivation + aérotherme" P6 ou P7, en laquelle la première tubulure de sortie 32, la deuxième tubulure de sortie 34 et la troisième tubulure de sortie sont ouvertes;
8- position " radiateur + aérotherme" P4, en laquelle la deuxième tubulure de sortie 32 et la troisième tubulure de sortie 36 sont ouvertes.

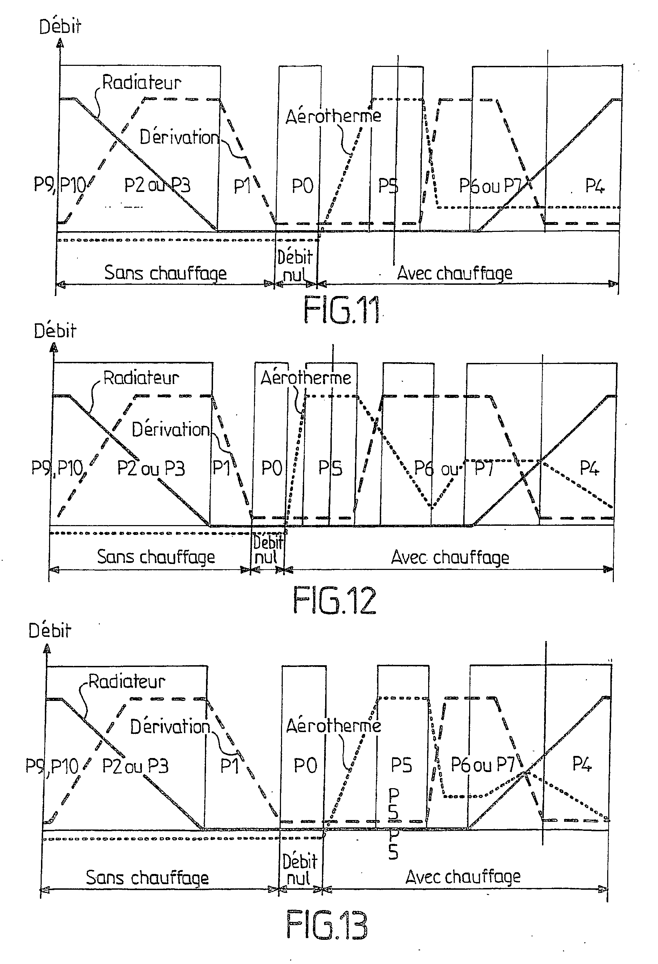

Les différentes positions précitées sont illustrées sur les diagrammes des figures 11, 12, 13 qui montrent des courbes de débit au travers des tubulures de sorties 32, 34, 36 en fonction de la position angulaire de l'organe de réglage 38 pour trois formes et répartitions différentes des ouvertures de passage 49 et 50. On constate que les trois première positions précitées, à savoir "dérivation", "radiateur + dérivation" et "radiateur" correspondent à un mode sans chauffage, tandis que les autres positions "radiateur + aérotherme", "radiateur + dérivation + aérotherme", "aérotherme + dérivation" et "aérotherme" correspondent à un mode avec chauffage.

Les séquences d'opérations précitées sont reprises dans le Tableau 2 joint en annexe.

La vanne permet de gérer indépendamment les débits de fluide dans les conduits précités et permet ainsi d'optimiser la température du bloc moteur 54 et le chauffage de l'habitacle.

En particulier après la phase de "débit nul" qui correspond au démarrage à froid du moteur, elle permet de faire circuler le fluide dans la branche "dérivation" 4 sans passer par le radiateur 3. Pendant cette phase de montée en température du moteur 1 il est aussi possible de faire passer une partie ou tout le fluide dans l'aérotherme 5, si un chauffage est désiré.

Lorsque la température du fluide a atteint ou dépassé un seuil critique prédéterminé, la liaison avec la branche "dérivation" 4 est interrompue et le fluide est mis en circulation dans le radiateur 3, une partie du fluide pouvant également circuler au travers de l' aérotherme 5.

Sur les diagrammes des figures 11 à 13, la phase "débit nul" a été matérialisée par un intervalle angulaire pour faciliter la lecture des diagrammes. Cependant, les observations faites précédemment pour les figures 2 à 4 s'appliquent aussi dans la mesure où la phase "débit nul" correspond en réalité à une valeur angulaire donnée.

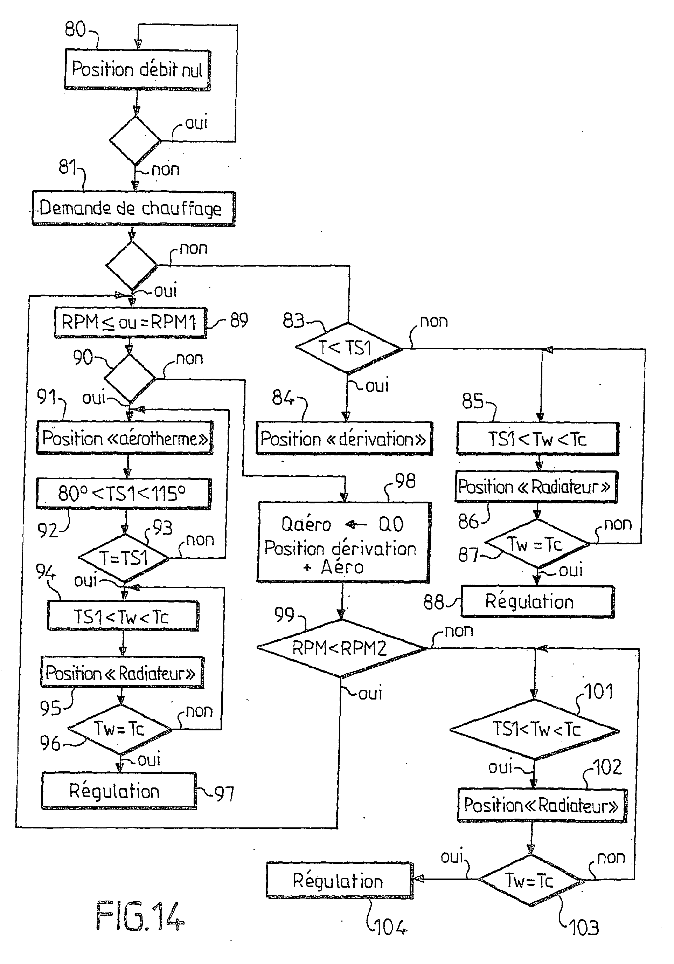

On se réfère maintenant à la Figure 14 qui représente suivant les étapes 80 à 104 d'un organigramme, le fonctionnement des moyens de commande 48 associés à la vanne 2.

La première étape, référencée 80, est une étape de démarrage à froid du moteur. Au moment du démarrage du moteur à froid, les moyens de commande ferment la vanne 2 de façon à couper complètement le débit dans le bloc moteur 1. Cette stratégie de "débit nul" peut être interrompue à tout moment, ponctuellement ou définitivement, si la charge et/ou le régime (critère de charge moteur Ps0: seuil en dessous duquel on maintient le débit nul; ou critère de régime moteur RPM0: seuil en dessous duquel on maintient le débit nul) sont trop importants et donc si le moteur nécessite d'être refroidi et traversé par le fluide par exemple pour éviter un point chaud ou une ébullition locale dans le moteur 1. Le débit circule alors dans le moteur1 et dans la branche "dérivation"4 uniquement de façon à limiter la quantité de fluide de refroidissement à chauffer. La durée de fermeture de la vanne et de débit nul s'étendent au maximum, par exemple, jusqu'à l'amorçage du pot catalytique et elle est aussi fonction de la température du fluide de refroidissement et de la charge du moteur.

Après cette phase de "débit nul", la vanne 2 permet à l'étape 811a circulation du débit suivant deux cas, un premier cas où il n'y a pas de commande de chauffage illustrée par les étapes 82 à 88 et un deuxième cas où il y a commande de chauffage illustrée par les étapes 89 à 104.

Dans le cas où il n'y a pas de commande de chauffage, tout le débit est dirigé suivant les étapes 82 à 84 dans la branche "dérivation" 4 jusqu'à ce que le liquide de refroidissement atteigne une valeur de seuil Ts1 comprise, par exemple, entre 80°C et 115°C. Avant de passer en mode régulation à l'étape 88, autour d'une température de consigne Tc, la vanne passe aux étapes 85, 86 et 87 à partir d'une température Tw telle que Ts1<Tw<Tc, par un mode de réchauffage du radiateur 3 à l'étape 86, de façon à limiter les chocs thermiques. La vanne 2 crée un débit très faible dans le radiateur et fait un va et vient entre une position radiateur fermé et une autre position radiateur ouvert, et ce jusqu'à atteindre la température de consigne Tc.

En variante, la vanne 2 peut à partir de Tw créer une légère fuite dans la branche radiateur de refroidissement 57 de façon à limiter les chocs thermiques, et ce jusqu'à atteindre la température de consigne Tc.

Au-delà, à l'étape 88, le système régule la température du fluide de refroidissement en fonction de la température de consigne Tc demandée par le calculateur moteur en contrôlant le débit dans le radiateur 3 et dans la branche "dérivation" 4.

Dans le cas d'une commande de chauffage, les moyens de commandes exécutent les étapes 89 à 97.

A l'étape 90, si le régime moteur RPM est en dessous d'un seuil RPM1, alors tout le débit du liquide de refroidissement passe dans la branche "aérotherme" 5 à l'étape 91, jusqu'à ce que la température du fluide de refroidissement atteigne une valeur de seuil Ts1 comprise par exemple entre 80°C et 115°C. Avant de passer dans le mode régulation de l'étape 97 autour d'une température de consigne Tc, la vanne 2 passe, à partir de Tw, telle que avec Ts1<Tw<Tc, par un mode de réchauffage du radiateur 3 à l'étape 95, de façon à limiter les chocs thermiques. La vanne 2 fait alors un va et vient entre une position radiateur fermé et une autre position radiateur ouvert, et ce jusqu'à atteindre la température de consigne Tc.

En variante, à partir de la température Tw la vanne 2 peut créer une légère fuite dans la branche radiateur de refroidissement de façon à limiter les chocs thermiques, et ce jusqu'à atteindre Tc.

Au-delà, le système régule la température du liquide en fonction de la consigne Tc demandée par le calculateur moteur en contrôlant le débit dans le radiateur 3 et en maintenant du débit dans l'aérotherme 5 pour satisfaire le confort.

Si la pompe à eau additionnelle 8 est présente dans le circuit, la pompe est en marche si la température intérieure du véhicule est inférieure à celle demandée par le passager et si RPM<RPM1. Si à l'étape 90 le régime moteur est au dessus d'un seuil RPM1 alors le débit dans l'aérotherme 5 est écrêté à l'étape 98 (par exemple à environ 10001/h au maximum ce qui correspond au débit de saturation thermique de l'aérotherme) et le reste du débit est envoyé par la vanne 2 dans la branche "dérivation" 63. Si à l'étape 99, le régime du moteur repasse en dessous d'un seuil RPM2 inférieur ou égal à RPM1 (par exemple un hystérésis: RPM2<=(RPM1-100)) alors le processus de commande de la vanne 2 retourne à l'exécution des étapes 91 à 97 sinon, il continue à écrêter le débit dans l'aérotherme 5 jusqu'à ce que la température du fluide de refroidissement atteigne une valeur de seuil Ts1 comprise par exemple entre 80° et 115°C à l'étape 101.

Avant de passer en mode régulation autour d'une température de consigne Tc, la vanne 2 passe à partir d'une température Tw telle que Ts1<Tw<Tc, par un mode de réchauffage du radiateur 3 à l'étape 102, de façon à limiter les chocs thermiques. Au delà, les moyens de commande 48 régulent à l'étape 104 la température du fluide de refroidissement en fonction de la température de consigne Tc demandée par le calculateur moteur en contrôlant le débit dans le radiateur 3. En même temps, la vanne 2 maintient et écrête le débit dans l'aérotherme 5 pour satisfaire le confort. Si la pompe à eau additionnelle 8 est présente dans le circuit, la pompe 7 est à l'arrêt.

Bien entendu, la vanne de l'invention et la programmation des moyens de commande selon le procédé de l'invention sont susceptibles de nombreuses variantes de réalisation. La vanne selon l'invention n'est bien sûr pas limitée à une vanne à trois voies comme dans la forme de réalisation décrite précédemment. Elle n'est pas non plus limitée à une application pour circuit de refroidissement de moteur thermique de véhicule automobile et peut servir à d' autres usages dans des domaines différents.

**TABLEAU 1**

| **Phase** | | **Aérotherme** | **Dérivation** | **Radiateur** | **Pompe additionnelle** | **Remarques** |
|---|---|---|---|---|---|---|
| **Position 0 débit** | | 0-1 l/h | 0-5 l/h | 0-5 1/h | | Fuites maximum acceptables 10 l/h |
| **Reg 1** | Début | 0 | 1 | 0 | 0 | Surchauffe moteur |
| Régulation sans chauffage | | | | | | |
| | Milieu | 0 | 1 | 1/2 | 0 | |
| | Fin | 0 | 0 | 1 | 0 | Position sécurité |
| **Dis 0** | | >0,2 à 1 | 0 | 0,8 à 1 | 0/1 | En cas de solution avec ressort de rappel |
| position de sécurité | | | | | | |
| **Reg 2** | Début | 0,2 | 1 | 0 | 0 | Régulation proportionnelle, dérivation aérotherme, débit 20001/h |
| Démarrage à froid avec chauffage haut régime moteur | Milieu | | 1 | 0 | 0 | |
| | Fin | X%(0,5) | 1 | 0 | 0 | |
| **Dis 1** | | 1 | 0 | 0 | 0/1 | |
| Démarrage à froid avec chauffage | | | | | | |
| **Reg3** | Début | 1 | 1/2+ | 0 | 0/1 | |
| Régulation avec chauffage | Milieu | 1 | 1/2 | 1/2+ | 0/1 | |
| | Fin | 0,2 | 0 | 1 | 0/1 | |
| **Dis2** | | 1 | 0 | 1 | 1 | Seulement en cas de pompe auxiliaire |
| Refroidis sement moteur à l'arrêt | | | | | | |

**TABLEAU 2**

| **Phase de vie Système:Séquencement** | **EWP** | **Débit moteur** | **Débit aérotherme** | **Débit radiateur** | **Débit dérivation** |
|---|---|---|---|---|---|
| 1:Démarrage à froid sans chauffage: RPM faible | Arrêt | 0 (proche de 0) | 0 (proche de 0) | 0 (proche de 0) | 0 (proche de 0) |
| 1':1: Démarrage à froid sans chauffage: RPM élevé | Arrêt | Q dérivation = Q moteur | 0 | 0 | Q moteur |
| 1":Montée en température du moteur | Arrêt | Q moteur | 0 | 0 | Q moteur |
| 2:Première ouverture vanne, sans chauffage | Arrêt | Radiateur + dérivation | 0 | Régulation | Régulation |
| 3:Régulation (T°moteur), sans chauffage | Arrêt | Radiateur + dérivation | 0 | Régulation | Régulation |
| 4:Véhicule à l'arrêt, moteur non tournant, sans chauffage | Marche | Qewp Radiateur + aérotherme | Qewp | Q post refroidissement | 0 |
| 5:Démarrage à froid avec chauffage, fort RPM moteur | Arrêt | Aérotherme + dérivation | Q chauffage max | 0 | Q trop plein |
| 5':Démarrage à froid avec chauffage, faible RPM | Marche | Aérotherme | Q chauffage max | 0 | 0 |
| 6:Première ouverture vanne, avec chauffage | Arrêt | Radiateur + dérivation + aérotherme | Q chauffage max | Régulation | Régulation |
| 7:Régulation (T° moteur) avec chauffage | Arrêt | Radiateur + dérivation + aérotherme | Q chauffage max | Régulation | Régulation |
| 8:Véhicule à l'arrêt, moteur non tournant, avec chauffage | Marche | Aérotherme | Q chauffage max | 0 | 0 |
| 9:Surchauffe moteur en marche faible RPM | Arrêt | Radiateur | 0 | Q max | 0 |
| 10:Sécurité vanne (idem 9) | Arrêt | Radiateur | 0 | Q max | 0 |

## Revendications

1. Procédé pour la commande du circuit de refroidissement d'un moteur (1) de véhicule automobile parcouru par un fluide de refroidissement sous l'action d'une pompe de circulation (7), ledit circuit étant alimenté par l'intermédiaire d'une vanne de commande (2) comprenant d'une part, une entrée de fluide (15) reliée à une arrivée de fluide de refroidissement en provenance du moteur (1), et une première (32), deuxième (34), et troisième (36) sorties de fluide reliées respectivement à un radiateur de refroidissement (3) du moteur 1, une branche de dérivation (4) du radiateur de refroidissement (3) du moteur (1), et à un aérotherme (5) pour le chauffage de l'habitacle, d'autre part, un organe de réglage (38) en rotation dans le corps de la vanne (2) propre à répartir et /ou couper la circulation du fluide de refroidissement dans les tubulures de sortie sous l'action de moyens de commande (48), procédé consistant à commander la vanne (2) suivant un nombre déterminé de phases de commandes ("Position 0 débit", "Reg1", "Dis 0", "'Reg2", "Dis1", "Reg3", "Dis2") réparties entre au moins deux modes de commande (48), un mode de commande de refroidissement du moteur (1) sans chauffage, de l'habitacle et un mode de commande de refroidissement du moteur (1) avec chauffage de l'habitacle et à commander la vanne (2) suivant au moins un troisième mode de commande qui est établi lors du démarrage à froid du moteur (1) et pour lequel l'organe de réglage (38) est commandé par les moyens de commandes (48) pour couper la circulation du fluide au travers de la vanne (2), et dans lequel les phases de commande ("Position 0 débit" Reg1", "Dis 0", "Reg2", "Dis1", "Reg3", "Dis2") sont déterminées par des secteurs angulaires adjacents les uns aux autres et disposés entre une première (θ1) et une deuxième position angulaire (θ2) d'extrémité de l'organe de réglage (38) dans un corps (16) de la vanne (2), et en ce qu'il comprend dans le mode de commande de refroidissement sans chauffage une première phase (Regl) de régulation du débit du fluide de refroidissement dans le radiateur (3) et dans le mode de commande do refroidissement avec chauffage une deuxième phase (Reg3) de régulation du débit du fluide de refroidissement dans le radiateur (3), et **caractérisé en ce que** les secteurs angulaires de la première phase (Reg1) et de la deuxième phase (Reg3) sont adjacents respectivement à la première (θ1) et à la deuxième position angulaire (θ2) d'extrémité de l'organe du réglage (38).

2. Procédé selon la revendication 1, **caractérisé en ce qu'**il consiste dans le troisième mode à limiter la pression dans le corps (1b) de la vanne (2) en libérant un clapet (70) mettant en communication l'intérieur du corps de la vanne (16) avec la branche dérivation (4).

3. Procédé selon la revendication 1 ou 2, **caractérisé en ce que** le troisième mode consiste à positionner l'organe de réglage (38) de la vanne (2) à une extrémité de l'excursion angulaire de la vanne (2) correspondant au premier (θ1) ou au deuxième angle d'extrémité (θ2).

4. Procédé selon la revendication 1 et 2, **caractérisé en ce que** le troisième mode, de commande consiste à positionner la vanne (2) à un angle d'ouverture, intermédiaire entre les secteurs angulaires des première (Reg1) et deuxième (Reg3) phases de régulation du débit du fluide de refroidissement dans le radiateur (3).

5. Procédé selon l'une des revendications précédentes, **caractérisé en ce qu'**il comprend dans le mode de commande de refroidissement sans chauffage une phase de régulation (Reg1) au cours de laquelle les débits dans le radiateur (3) et la branche dérivation (4) sont évolutifs, le fluide de refroidissement circulant uniquement dans la branche de dérivation (4) en début de la phase de régulation et circulant uniquement dans le radiateur (2) en fin de la phase de régulation.

6. Procédé selon la revendication précédente, **caractérisé en ce qu'**il comprend, dans le mode de commande de refroidissement avec chauffage, une phase de régulation (Reg3) au cours de laquelle le débit du fluide de refroidissement dans le radiateur (3) passe progressivement d'une valeur pratiquement nulle en début de la phase de régulation (Reg3) à une valeur maximum en fin de la phase, le débit dans l'aérotherme (5) passe d'une valeur de débit maximum en début de phase à une valeur plus faible en fin de phase, et **en ce que** le débit dans la branche dérivation (4) décroît jusqu'à s'annuler dans la branche dérivation (4) entre le début et la fin de la phase de régulation (Reg3).

7. Procédé selon les revendications 5 et 6, **caractérisé en ce que** dans les première et deuxième phases de régulation (Reg1, Reg3), le débit du fluide de refroidissement en fonction de l'angle de rotation θ de l'organe de réglage (38) suit des courbes sensiblement parallèles.

8. Procédé selon les revendications 5 et 6, **caractérisé en ce que** dans les première et deuxième phases de régulation (Reg1, Reg3) θ, le débit du fluide de refroidissement en fonction de l'angle de rotation θ de l'organe de réglage (38) suit des courbes de pentes sensiblement opposées respectivement croissante et décroissante.

9. Procédé selon la revendication précédente, **caractérisé en ce que** le débit dans le radiateur (3) en début de la première phase de régulation (Reg1) est nul.

10. Procédé selon la revendication 8, **caractérisé en ce que** le débit dans le radiateur (3) en début de la première phase de régulation (Reg1) est maximum.

11. Procédé selon l'une des revendications précédentes, **caractérisé en ce qu'**il comprend dans le mode de commande de refroidissement avec chauffage une phase de démarrage à froid (Dis1) du moteur (1) où seul l'aérotherme (5) est parcouru par le fluide de refroidissement.

12. Procédé selon l'une des revendications précédentes, **caractérisé en ce qu'**il comprend dans le mode de commande de refroidissement avec chauffage une phase (Reg2) de démarrage à froid à haut régime moteur où la circulation du fluide de refroidissement a lieu principalement dans la branche de dérivation (4).

13. Procécé selon l'une des revendications précédentes, **caractérisé en ce qu'**il comprend dans le mode de commande de refroidissement avec chauffage une phase (Dis2) de refroidissement du moteur à l'arrêt.

14. Procédé selon l'une des revendications précédentes, **caractérisé en ce qu'**il comprend une phase de sécurité (Dis0) où seuls le radiateur (3) et/ou l'aérotherme (5) sont traversés par le fluide de refroidissement.

15. Procédé selon la revendication précédente, **caractérisé en ce que** la phase de sécurité consiste à commander la vanne (2) à prendre une position (θ2) située à l'une des extrémités de son excursion angulaire θ correspondant au premier (θ1) ou au deuxième angle d'ouverture (θ2) et opposée à celle occupée par l'organe de réglage (38) pour couper la circulation du fluide de refroidissement dans la vanne (2) lorsqu'il est commande suivant le troisième mode.

16. Procédé selon l'une des revendications précédentes, **caractérisé en ce qu'**il consiste à commander la vanne :
soit dans le premier mode dans l'une des positions: "dérivation", "radiateur + dérivation"; "radiateur",
soit dans le deuxième mode dans l'une des positions: "radiateur + aérotherme", "radiateur + dérivation + aérotherme", "aérotherme + dérivation", "aérotherme" lorsqu'un mode avec chauffage est désiré.

17. Procédé selon l'une des revendications précédentes, **caractérisé en ce qu'**il consiste à fermer la vanne (2) lors du démarrage à froid du moteur de façon à limiter le débit dans le bloc moteur (1) à débit pratiquement nul et à rétablir le débit dans le bloc moteur (1) et dans la branche "dérivation" (4) lorsque la charge ou le régime moteur ou la température du liquide de refroidissement dépassent respectivement des valeurs de seuil déterminées.

18. Procédé selon l'une des revendications précédentes, **caractérisé en ce qu'**il consiste dans le premier mode "sans chauffage" à diriger après la phase de démarrage à froid du moteur tout le débit de fluide traversant le moteur dans la branche "dérivation" (4) jusqu'à ce que la température de refroidissement atteigne une valeur de seuil de température déterminée TS1 comprise à l'intérieur d'une fourchette de température de valeur déterminée (83), puis lorsque la température du fluide de refroidissement atteint une deuxième valeur de seuil déterminée Tw inférieure à une température de consigné Tc (85), à diriger le fluide de refroidissement dans le "radiateur" (3), puis à asservir la température du liquide de refroidissement sur la température de consigne Tc (88) lorsque la température du fluide de refroidissement atteint la température de consigne.

19. Procède selon l'une des revendications précédentes, **caractérisé en ce qu'**il consiste dans le deuxième mode avec chauffage à diriger après la phase de démarrage à froid du moteur, le liquide de refroidissement dans l'aérotherme (5) lorsque le régime du moteur est en dessous d'une valeur de seuil déterminée RPM1 (89) jusqu'à ce que la température du liquide de refroidissement atteigne une valeur de seuil Ts1 comprise à l'intérieur d'une fourchette de valeurs de température déterminées (92), puis lorsque la température du fluide de refroidissement atteint une deuxième valeur de seuil de température déterminée TW inférieure à une température de consigne Tc (94), à diriger le fluide de refroidissement dans la branche "radiateur" (57), puis à asservir la température du liquide de refroidissement sur la température de consigne Tc (97) lorsque la températures du liquide de refroidissement atteint la température de consigne Tc.

20. Procédé selon l'une des revendications précédentes, **caractérisé en ce qu'**il consiste:
- lorsque le régime du moteur est au dessus de la valeur de seuil déterminée RPM1 à écrêter (98) le débit du liquide de refroidissement dans l'aérotherme (5) et à envoyer le reste du débit dans la branche "dérivation" (4),
- lorsque le régime moteur RPM est supérieur (99) à un deuxième seuil de valeur déterminée RPM2. lui même supérieur au premier seuil RPM et lorsque la température du liquide de refroidissement atteint une valeur Ts1 comprise à l'intérieur d'une fourchette de valeurs de température déterminées (100), puis lorsque la température du fluide de refroidissement atteint une deuxième valeur de seuil de température déterminée TW inférieure à une température de consigne Tc (101), à diriger le fluide de refroidissement dans le "radiateur"(3), puis à asservir la, température du liquide de refroidissement sur la température de consigne Tc (104) lorsque la température du liquide de refroidissement atteint la température de consigne Tc.

21. Procédé selon l'une des revendications précédentes, **caractérisé en ce qu'**il met en oeuvre une vanne (2) ayant trois tubulures de sortie une première tubulure de sortie (34) reliée à la branche dérivation (4), une deuxième tubulure de sortie (32) reliée au radiateur (3) et une troisième tubulure de sortie (36) reliée à l'aérotherme et **en ce que** l'organe de réglage (38) de la vanne (2) est propre à prendre successivement au moins les positions suivantes lorsqu'il est entraîné en rotation dans un sens donné:
- position "radiateur" P9 ou P10, en laquelle la deuxième tubulure de sortie (32) est ouverte;
- position "radiateur + dérivation" P2 ou P3, en laquelle la première tubulure de sortie (34) et la deuxième tubulure de sortie (32) sont ouvertes;
- position "dérivation" P1, en laquelle la première tubulure de sortie (34) est ouverte;
- position "débit nul" P0, en laquelle aucune tubulure de sortie n'est ouverte et pour laquelle le débit moteur maximum toléré dans le moteur (1) est de l'ordre de quelques, litres par heure,
- position "aérotherme" P5' ou P8, en laquelle la troisième tubulure de sortie (36) est ouverte;
- position "aérotherme + dérivation" P5, en laquelle la première tubulure de sortie (34) et la troisième tubulure de sortie (36) sont ouvertes;
- position "radiateur + dérivation + aérotherme" P6 ou P7, en laquelle la première tubulure de sortie (32), la deuxième tubulure de sortie (34) et la troisième tubulure de sortie sont ouverte.
- position "radiateur + aérotherme" P4, en laquelle la deuxième tubulure de sortie (32) et la troisième tubulure de sortie (36) sont ouvertes;

22. Procédé selon la revendication précédente, **caractérisé en ce que** l'organe de réglage (38) est propre à prendre une position "débit nul", en laquelle aucune sortie n'est ouverte et le débit dans le moteur est pratiquement nul.

23. Procédé selon l'une des revendications 21 et 22, **caractérisé en ce que** l'organe de réglage (38) est propre à prendre en outre une position "sécurité" qui correspond à la position "radiateur', en laquelle la' deuxième sortie (34) et la troisième sortie" aérotherme" (36) sont ouvertes.

24. Procédé selon l'une des revendications 21 à 23, **caractérisé en ce que** l'organe de réglage (38) est propre à prendre en outre une position de sécurité qui correspond à la position "radiateur", en laquelle la première sortie (32) est ouverte.

25. Procédé selon l'une des revendications 21 à 24, **caractérisé en ce qu'**il consiste à amener l'organe de réglage (38):
soit dans l'une des position: "dérivation", "radiateur + dérivation", "radiateur"_{,} lorsqu'un mode sans chauffage est désiré,
soit dans l'une des positions: "radiateur + aérothermie", "radiateur + dérivation + aérotherme". "aérotherme + dérivation", "aérotherme" lorsqu'un mode avec chauffage est désiré.

26. Procédé selon l'une des revendications 21 à 25, **caractérisé en ce qu'**il consiste à fermer la vanne (2) lors du démarrage à froid du moteur de façon à limiter le débit dans le bloc moteur (1) à un débit pratiquement nul et à rétablir le débit dans le bloc moteur (1) et dans la branche "dérivation" (4) lorsque la charge ou le régime moteur ou la température du liquide de refroidissement dépassent respectivement des valeurs de seuil déterminées.

27. Procédé selon la revendication précédente, **caractérisé en ce qu'**il consiste dans le mode "sans chauffage" à diriger, après la phase de démarrage à froid du moteur, tout le débit de fluide traversant le moteur dans la branche "dérivation" (4) jusqu'à ce que la température de refroidissement atteigne une valeur de seuil de température déterminée TS1 comprise à l'intérieur d'une fourchette de température de valeur déterminée, (83), puis lorsque la température du fluide de refroidissement atteint une deuxième valeur de seuil déterminée Tw inférieure à une température de consigne Tc (85), les moyens des commande dirigent le fluide de refroidissement dans le "radiateur" (2), puis les moyens de commande (48) asservissent la température du liquide de refroidissement sur la température de consigne Tc (88) lorsque la température du fluide de refroidissement atteint la température de consigne.

28. Procédé selon l'une des revendications 26 et 27, **caractérisé en ce que** dans le mode avec chauffage il consiste à diriger après la phase de démarrage à froid du moteur, le liquide de refroidissement dans l'aérotherme lorsque le régime du moteur est en dessous d'une valeur de seuil déterminée RPM (89) jusqu'à ce que la température du liquide de refroidissement atteigne une valeur de seuil Ts1 comprise à l'intérieur d'une fourchette de valeurs de température déterminées (92), puis lorsque la température du fluide de refroidissement atteint une deuxième valeur de seuil de température déterminée TW inférieur à une température de consigne Tc (94), les moyens de commande (48) dirigeant le fluide de refroidissement dans la branche "radiateur" (57), puis les moyens de commande (48) asservissent la température du liquide de refroidissement sur la température de consigne Tc (97) lorsque la température du liquide de refroidissement atteint la température de consigne Tc.

29. Procédé selon la revendication précédente, **caractérisé en ce qu'**il consiste:
- lorsque le régime du moteur est au dessus de la valeur de seuil déterminée RPM à écrêter (98) le débit du liquide de refroidissement dans l'aérotherme (5) et à envoyer le reste du débit dans la branche "dérivation" (4),
- lorsque le régime moteur RPM est supérieur (99) à un deuxième seuil de valeur déterminée RPM2 lui même supérieur au premier seuil RPM1 et lorsque la température du liquide de refroidissement atteint une valeur Ts1 comprise à l'intérieur d'une fourchette de valeurs de température déterminées (100), puis lorsque la température du fluide de refroidissement atteint une deuxième valeur de seuil de température déterminé TW inférieure à une température de consigne Tc (101), à diriger le fluide de refroidissement dans le "radiateur"(3), puis à asservir la température du liquide de refroidissement sur la température de consigne Tc (104) lorsque la température du liquide de refroidissement atteint la température de consigne Tc.

## Claims

1. Method for controlling the cooling circuit of a motor-vehicle engine (1) through which cooling fluid travels under the action of a circulation pump (7), the said circuit being supplied by means of a control valve (2) comprising on the one hand, a fluid inlet (15) connected to an inflow of cooling fluid originating from the engine (1), and a first (32), second (34), and third (36) fluid outlets connected respectively to a radiator (3) for cooling the engine (1), a by-pass branch (4) of the radiator (3) for cooling the engine (1) and to a unit heater (5) for the heating of the car interior, and, on the other hand, a rotary adjustment member (38) in the body of the valve (2) suitable for distributing and/or cutting off the circulation of the cooling fluid in the outlet nozzles under the action of control means (48), the said method consisting in controlling the valve (2) according to a determined number of control phases ("position 0 flow rate", "Reg1", "Dis 0", "Reg2", "Dis1", "Reg3", "Dis2") distributed between at least two control modes (48), a control mode for cooling the engine (1) without heating of the car interior and a control mode for cooling the engine (1) with heating of the car interior and in controlling the valve (2) according to at least a third control mode that is established when the engine (1) is started from cold and for which the adjustment member (38) is controlled by the control means (48) for cutting off the circulation of the fluid through the valve (2), and in which the control phases ("position 0 flow rate", "Reg1", "Dis 0", "Reg2", "Dis1", "Reg3", "Dis2") are determined by angular sectors that are adjacent to one another and placed between a first end angular position (θ1) and a second end angular position (θ2) of the adjustment member (38) in a body (16) of the valve (2), the method comprising, in the control mode for cooling without heating, a first phase (Reg1) of regulation of the flow rate of the cooling fluid in the radiator (3) and, in the control mode for cooling with heating, a second phase (Reg3) of regulation of the flow rate of the cooling fluid in the radiator (3), and **characterized in that** the angular sectors of the first phase (Reg1) and of the second phase (Reg3) are adjacent respectively to the first end angular position (θ1) and to the second end angular position (θ2) of the adjustment member (38).

2. Method according to Claim 1, **characterized in that** it consists in the third mode in limiting the pressure in the body (16) of the valve (2) by releasing a valve element (70) placing the inside of the valve body (16) in communication with the by-pass branch (4).

3. Method according to Claim 1 or 2, **characterized in that** the third mode consists in positioning the adjustment member (38) of the valve (2) to one end of the angular travel of the valve (2) corresponding to the first end angle (θ1) or to the second end angle (θ2).

4. Method according to Claims 1 and 2, **characterized in that** the third control mode consists in positioning the valve (2) at an open angle, mid-way between the angular sectors of the first (Reg1) and second (Reg3) regulation phases of the flow rate of the cooling fluid in the radiator (3).

5. Method according to one of the preceding claims, **characterized in that** it comprises, in the control mode for cooling without heating, a regulation phase (Reg1) during which the flow rates in the radiator (3) and the by-pass branch (4) are progressive, the cooling fluid circulating only in the by-pass branch (4) at the beginning of the regulation phase and circulating only in the radiator (2) at the end of the regulation phase.

6. Method according to the preceding claim, **characterized in that** it comprises, in the control mode for cooling with heating, a regulation phase (Reg3) during which the flow rate of the cooling fluid in the radiator (3) passes progressively from a practically zero value at the beginning of the regulation phase (Reg3) to a maximum value at the end of the phase, the flow rate in the unit heater (5) passes from a maximum flow-rate value at the beginning of the phase to a lower value at the end of the phase, and **in that** the flow rate in the by-pass branch (4) decreases to vanishing point in the by-pass branch (4) between the beginning and the end of the regulation phase (Reg3).

7. Method according to Claims 5 and 6, **characterized in that**, in the first and second regulation phases (Reg1, Reg3), the flow rate of the cooling fluid as a function of the rotation angle θ of the adjustment member (38) follows substantially parallel curves.

8. Method according to Claims 5 and 6, **characterized in that** the first and second regulation phases (Reg1, Reg3), the flow rate of the cooling fluid as a function of the rotation angle θ of the adjustment member (38) follows curves with substantially opposite slopes, respectively increasing and decreasing.

9. Method according to the preceding claim, **characterized in that** the flow rate in the radiator (3) at the beginning of the first regulation phase (Reg1) is zero.

10. Method according to Claim 8, **characterized in that** the flow rate in the radiator (3) at the beginning of the first regulation phase (Reg1) is maximum.

11. Method according to one of the preceding claims, **characterized in that** it comprises, in the control mode for cooling with heating, a phase for cold start-up (Dis1) of the engine (1) where the cooling fluid travels through only the unit heater (5).

12. Method according to one of the preceding claims, **characterized in that** it comprises, in the control mode for cooling with heating, a phase (Reg2) for cold start-up at high engine speed in which the cooling fluid circulates mainly in the by-pass branch (4).

13. Method according to one of the preceding claims, **characterized in that** it comprises, in the control mode for cooling with heating, a phase (Dis2) for cooling the engine when stopped.

14. Method according to one of the preceding claims, **characterized in that** it comprises a safety phase (Dis0) in which the cooling fluid passes through only the radiator (3) and/or the unit heater (5).

15. Method according to the preceding claim, **characterized in that** the safety phase consists in controlling the valve (2) to take a position (θ2) situated at one of the ends of its angular travel θ corresponding to the first aperture angle (θ1) or to the second aperture angle (θ2) and opposite to that occupied by the adjustment member (38) in order to cut off the circulation of the cooling fluid in the valve (2) when it is controlled according to the third mode.

16. Method according to one of the preceding claims, **characterized in that** it consists in controlling the valve:
either in the first mode in one of the positions: "by-pass", "radiator + by-pass", "radiator",
or in the second mode in one of the positions: "radiator + unit heater", radiator + by-pass + unit heater", "unit heater + by-pass", "unit heater" when a mode with heating is desired.

17. Method according to one of the preceding claims, **characterized in that** it consists in closing the valve (2) at the time of the cold start-up of the engine so as to limit the flow rate in the engine block (1) to a practically zero flow rate and to re-establish the flow rate in the engine block (1) and in the "by-pass" branch (4) when the load or the speed of the engine or the temperature of the cooling liquid respectively exceed determined threshold values.

18. Method according to one of the preceding claims, **characterized in that** it consists, in the first "without heating" mode, in directing, after the cold start-up phase of the engine, all the flow rate of the fluid passing through the engine into the "by-pass" branch (4) until the cooling temperature reaches a determined temperature threshold value TS1 included in a temperature range of determined value (83), then when the temperature of the cooling fluid reaches a second determined threshold value Tw below a setpoint temperature Tc (85), in directing the cooling fluid into the "radiator" (3), and then enslaving the temperature of the cooling liquid to the setpoint temperature Tc (88) when the temperature of the cooling fluid reaches the setpoint temperature.

19. Method according to one of the preceding claims, **characterized in that** it consists, in the second mode with heating, in directing, after the cold start-up phase of the engine, the cooling liquid into the unit heater (5) when the engine speed is below a determined threshold value RPM1 (89) until the temperature of the cooling liquid reaches a threshold value Ts1 included in a range of determined temperature values (92), and then, when the temperature of the cooling fluid reaches a second determined temperature threshold value TW below a setpoint temperature Tc (94), in directing the cooling fluid into the "radiator" branch (57), and then enslaving the temperature of the cooling liquid to the setpoint temperature Tc (97) when the temperature of the cooling liquid reaches the setpoint temperature Tc.

20. Method according to one of the preceding claims, **characterized in that** it consists:
- when the engine speed is above the determined threshold value RPM1, in clipping (98) the flow rate of the cooling liquid into the unit heater (5) and in sending the rest of the flow rate into the "by-pass" branch (4),
- when the engine speed RPM is greater (99) than a second threshold of determined value RPM2 itself greater than the first threshold RPM1, and when the temperature of the cooling liquid reaches a value Ts1 included in a range of determined temperature values (100), and then, when the temperature of the cooling fluid reaches a second determined temperature threshold value TW below a setpoint temperature Tc (101), in directing the cooling fluid into the "radiator" (3), and then enslaving the temperature of the cooling liquid to the setpoint temperature Tc (104) when the temperature of the cooling liquid reaches the setpoint temperature Tc.

21. Method according to one of the preceding claims, **characterized in that** it uses a valve (2) having three outlet nozzles, a first outlet nozzle (34) connected to the by-pass branch (4), a second outlet nozzle (32) connected to the radiator (3) and a third outlet nozzle (36) connected to the unit heater, and **in that** the adjustment member (38) of the valve (2) is capable of taking successively at least the following positions when it is rotated in a given direction:
- "radiator" position P9 or P10, in which the second outlet nozzle (32) is open;
- "radiator + by-pass" position P2 or P3, in which the first outlet nozzle (34) and the second outlet nozzle (32) are open;
- "by-pass" position P1, in which the first outlet nozzle (34) is open;
- "zero flow rate" position P0, in which no outlet nozzle is open and for which the maximum engine flow rate tolerated in the engine (1) is of the order of a few litres per hour;
- "unit heater" position P5' or P8, in which the third outlet nozzle (36) is open;
- "unit heater + by-pass" position P5, in which the first outlet nozzle (34) and the third outlet nozzle (36) are open;
- "radiator + by-pass + unit heater" position P6 or P7, in which the first outlet nozzle (32), the second outlet nozzle (34) and the third outlet nozzle are open;
- "radiator + unit heater" position P4, in which the second outlet nozzle (32) and the third outlet nozzle (36) are open.

22. Method according to the preceding claim, **characterized in that** the adjustment member (38) is capable of taking a "zero flow rate" position in which no outlet is open and the flow rate in the engine is virtually zero.

23. Method according to one of Claims 21 and 22, **characterized in that** the adjustment member (38) is capable of also taking a "safety" position which corresponds to the "radiator" position in which the second outlet (34) and the third "unit heater" outlet (36) are open.

24. Method according to one of Claims 21 to 23, **characterized in that** the adjustment member (38) is capable of also taking a safety position that corresponds to the "radiator" position in which the first outlet (32) is open.

25. Method according to one of Claims 21 to 24, **characterized in that** it consists in moving the adjustment member (38):
either into one of the positions: "by-pass", "radiator + by-pass", "radiator", when a mode without heating is desired,
or into one of the positions: "radiator + unit heater", "radiator + by-pass + unit heater", "unit heater + by-pass", "unit heater" when a mode with heating is desired.

26. Method according to one of Claims 21 to 25, **characterized in that** it consists in closing the valve (2) when there is the cold start-up of the engine so as to limit the flow rate in the engine block (1) to a practically zero flow rate and to re-establish the flow rate in the engine block (1) and in the "by-pass" branch (4) when the engine load or speed or the temperature of the cooling liquid exceed respectively determined threshold values.

27. Method according to the preceding claim, **characterized in that** it consists, in the "without heating" mode, in directing, after the cold start-up of the engine phase, all of the flow rate of fluid passing through the engine into the "by-pass" branch (4) until the cooling temperature reaches a determined temperature threshold value Ts1 included in a temperature range of determined value (83), then, when the temperature of the cooling fluid reaches a second determined threshold value Tw, below a setpoint temperature Tc (85), the control means direct the cooling fluid into the "radiator" (2), and then the control means (48) enslave the temperature of the cooling liquid to the setpoint temperature Tc (88) when the temperature of the cooling fluid reaches the setpoint temperature.

28. Method according to one of Claims 26 and 27, **characterized in that**, in the mode with heating, it consists in directing, after the cold start-up of the engine phase, the cooling liquid into the unit heater when the engine speed is below a determined threshold value RPM1 (89) until the temperature of the cooling liquid reaches a threshold value Ts1 included in a range of determined temperature values (92), and then, when the temperature of the cooling fluid reaches a second determined temperature threshold value Tw below a setpoint temperature Tc (94), the control means (48) direct the cooling fluid into the "radiator" branch (57), and then the control means (48) enslave the temperature of the cooling liquid to the setpoint temperature Tc (97) when the temperature of the cooling liquid reaches the setpoint temperature Tc.

29. Method according to the preceding claim, **characterized in that** it consists:
- when the engine speed is above the determined threshold value RPM1, in clipping (98) the flow rate of the cooling liquid into the unit heater (5) and in sending the rest of the flow rate into the "by-pass" branch (4),
- when the engine speed RPM is greater (99) than a second threshold of determined value RPM2 itself greater than the first threshold RPM1 and when the temperature of the cooling liquid reaches a value Ts1 included in a range of determined temperature values (100), and then when the temperature of the cooling fluid reaches a second determined temperature threshold value TW below a setpoint temperature Tc (101), in directing the cooling fluid into the "radiator" (3) and then enslaving the temperature of the cooling liquid to the setpoint temperature Tc (104) when the temperature of the cooling liquid reaches the setpoint temperature Tc.

## Patentansprüche

1. Verfahren zur Steuerung des Kühlkreislaufs eines Motors (1) eines Kraftfahrzeugs, der unter der Wirkung einer Umwälzpumpe (7) von einem Kühlfluid durchflossen wird, wobei der Kreislauf mittels eines Steuerventils (2) gespeist wird, das einerseits einen Fluideingang (15), der mit einer vom Motor (1) kommenden Kühlfluidzufuhr verbunden ist, und einen ersten (32), zweiten (34) und dritten (36) Fluidausgang enthält, die mit einem Kühler (3) des Motors (1), mit einem Ableitungszweig (4) des Kühlers (3) des Motors (1), bzw. mit einem Lufterhitzer (5) für die Heizung des Fahrzeuginnenraums verbunden sind, und andererseits ein im Körper des Ventils (2) drehendes Einstellorgan (38) enthält, das den Kreislauf des Kühlfluids in den Ausgangsstutzen unter der Wirkung von Steuereinrichtungen (48) aufteilen und/oder unterbrechen kann, wobei das Verfahren darin besteht, das Ventil (2) gemäß einer bestimmten Anzahl von Steuerphasen ("Stellung 0 Durchsatz", "Reg1", "Dis0", "Reg2", "Dis1", "Reg3", "Dis2") zu steuern, die zwischen mindestens zwei Steuermodi (48) aufgeteilt sind, einem Steuermodus der Kühlung des Motors (1) ohne Heizung des Fahrzeuginnenraums und einem Steuermodus der Kühlung des Motors (1) mit Heizung des Fahrzeuginnenraums, und das Ventil (2) gemäß mindestens einem dritten Steuermodus zu steuern, der beim Kaltstart des Motors (1) festgelegt wird, und bei dem das Einstellorgan (38) von den Steuereinrichtungen (48) gesteuert wird, um den Kreislauf des Fluids durch das Ventil (2) zu unterbrechen, und bei dem die Steuerphasen ("Stellung 0 Durchsatz", "Reg1", "Dis0" "Reg2", "Dis1", "Reg3", "Dis2") durch Winkelsektoren bestimmt werden, die einander benachbart und zwischen einer ersten (θ1) und einer zweiten Endwinkelstellung (θ2) des Einstellorgans (38) in einem Körper (16) des Ventils (2) angeordnet sind, wobei das Verfahren im Steuermodus der Kühlung ohne Heizung eine erste Phase (Reg1) der Regelung des Durchsatzes des Kühlfluids im Kühler (3) und im Steuermodus der Kühlung mit Heizung eine zweite Phase (Reg3) der Regelung des Durchsatzes des Kühlfluids im Kühler (3) enthält, und **dadurch gekennzeichnet, dass** die Winkelsektoren der ersten Phase (Reg1) und der zweiten Phase (Reg3) der ersten (θ1) bzw. der zweiten Endwinkelstellung (θ2) des Einstellorgans (38) benachbart sind.

2. Verfahren nach Anspruch 1, **dadurch gekennzeichnet, dass** es im dritten Modus darin besteht, den Druck im Körper (16) des Ventils (2) zu begrenzen, indem eine Ventilklappe (70) freigegeben wird, die das Innere des Körpers des Ventils (16) mit dem Ableitungszweig (4) in Verbindung setzt.

3. Verfahren nach Anspruch 1 oder 2, **dadurch gekennzeichnet, dass** der dritte Modus darin besteht, das Einstellorgan (38) des Ventils (2) an einem Ende der Winkelauslenkung des Ventils (2) zu positionieren, das dem ersten (θ1) oder dem zweiten Endwinkel (θ2) entspricht.

4. Verfahren nach Anspruch 1 und 2, **dadurch gekennzeichnet, dass** der dritte Steuermodus darin besteht, das Ventil (2) in einem Öffnungswinkel zu positionieren, der zwischen den Winkelsektoren der ersten (Reg1) und zweiten (Reg3) Regelungsphase des Durchsatzes des Kühlfluids im Kühler (3) liegt.

5. Verfahren nach einem der vorhergehenden Ansprüche, **dadurch gekennzeichnet, dass** es im Steuermodus der Kühlung ohne Heizung eine Regelungsphase (Reg1) enthält, während der die Durchsätze im Kühler (3) und im Ableitungszweig (4) erweiterbar sind, wobei das Kühlfluid zu Beginn der Regelungsphase nur im Ableitungszweig (4) und am Ende der Regelungsphase nur im Kühler (2) fließt.

6. Verfahren nach dem vorhergehenden Anspruch, **dadurch gekennzeichnet, dass** es im Steuermodus der Kühlung mit Heizung eine Regelungsphase (Reg3) enthält, während der der Durchsatz des Kühlfluids im Kühler (3) progressiv von einem Wert praktisch gleich Null zu Beginn der Regelungsphase (Reg3) auf einen maximalen Wert am Ende der Phase übergeht, der Durchsatz im Lufterhitzer (5) von einem maximalen Durchsatzwert zu Phasenbeginn auf einen geringeren Wert am Phasenende übergeht, und dass der Durchsatz im Ableitungszweig (4) abnimmt, bis er im Ableitungszweig (4) zwischen dem Beginn und dem Ende der Regelungsphase (Reg3) zu Null wird.

7. Verfahren nach den Ansprüchen 5 und 6, **dadurch gekennzeichnet, dass** in der ersten und der zweiten Regelungsphase (Reg1, Reg3) der Durchsatz des Kühlfluids abhängig vom Drehwinkel θ des Einstellorgans (38) im Wesentlichen parallelen Kurvenlinien folgt.

8. Verfahren nach den Ansprüchen 5 und 6, **dadurch gekennzeichnet, dass** in der ersten und der zweiten Regelungsphase (Reg1, Reg3) der Durchsatz des Kühlfluids abhängig vom Drehwinkel θ des Einstellorgans (38) Kurvenlinien mit im Wesentlichen entgegengesetzten zunehmenden bzw. abnehmenden Steigungen folgt.

9. Verfahren nach dem vorhergehenden Anspruch, **dadurch gekennzeichnet, dass** der Durchsatz im Kühler (3) zu Beginn der ersten Regelungsphase (Reg1) Null ist.

10. Verfahren nach Anspruch 8, **dadurch gekennzeichnet, dass** der Durchsatz im Kühler (3) zu Beginn der ersten Regelungsphase (Reg1) maximal ist.

11. Verfahren nach einem der vorhergehenden Ansprüche, **dadurch gekennzeichnet, dass** es im Steuermodus der Kühlung mit Heizung eine Phase des Kaltstarts (Dis1) des Motors (1) enthält, in der nur der Lufterhitzer (5) vom Kühlfluid durchflossen wird.

12. Verfahren nach einem der vorhergehenden Ansprüche, **dadurch gekennzeichnet, dass** es im Steuermodus der Kühlung mit Heizung eine Phase (Reg2) des Kaltstarts mit hoher Motordrehzahl enthält, in der der Kreislauf des Kühlfluids hauptsächlich im Ableitungszweig (4) stattfindet.

13. Verfahren nach einem der vorhergehenden Ansprüche, **dadurch gekennzeichnet, dass** es im Steuermodus der Kühlung mit Heizung eine Phase (Dis2) der Kühlung des abgeschalteten Motors enthält.

14. Verfahren nach einem der vorhergehenden Ansprüche, **dadurch gekennzeichnet, dass** es eine Sicherheitsphase (Dis0) enthält, in der nur der Kühler (3) und/oder der Lufterhitzer (5) vom Kühlfluid durchflossen werden.

15. Verfahren nach dem vorhergehenden Anspruch, **dadurch gekennzeichnet, dass** die Sicherheitsphase darin besteht, dem Ventil (2) zu befehlen, eine Stellung (θ2) einzunehmen, die sich an einem der Enden seiner Winkelauslenkung θ entsprechend dem ersten (θ1) oder dem zweiten Öffnungswinkel (θ2) und entgegengesetzt zu derjenigen befindet, die vom Einstellorgan (38) eingenommen wird, um die Strömung des Kühlfluids im Ventil (2) zu unterbrechen, wenn es gemäß dem dritten Modus gesteuert wird.

16. Verfahren nach einem der vorhergehenden Ansprüche, **dadurch gekennzeichnet, dass** es darin besteht, das Ventil zu steuern:
entweder im ersten Modus in eine der Stellungen: "Ableitung", "Kühler + Ableitung"; "Kühler", oder im zweiten Modus in eine der Stellungen:
"Kühler + Lufterhitzer", "Kühler + Ableitung + Lufterhitzer", "Lufterhitzer + Ableitung", "Lufterhitzer", wenn ein Modus mit Heizung erwünscht ist.

17. Verfahren nach einem der vorhergehenden Ansprüche, **dadurch gekennzeichnet, dass** es darin besteht, das Ventil (2) beim Kaltstart des Motors zu schließen, um den Durchsatz im Motorblock (1) auf einen Durchsatz praktisch gleich Null zu begrenzen, und den Durchsatz im Motorblock (1) und im Zweig "Ableitung" (4) wiederherzustellen, wenn die Last oder die Antriebsdrehzahl oder die Temperatur der Kühlflüssigkeit bestimmte Schwellwerte überschreiten.

18. Verfahren nach einem der vorhergehenden Ansprüche, **dadurch gekennzeichnet, dass** es im ersten Modus "ohne Heizung" darin besteht, nach der Kaltstartphase des Motors den ganzen den Motor durchquerenden Fluiddurchsatz in den Zweig "Ableitung" (4) zu lenken, bis die Kühltemperatur einen bestimmten Temperaturschwellwert TS1 erreicht, der innerhalb eines Temperaturbereichs von bestimmtem Wert (83) liegt, dann, wenn die Temperatur des Kühlfluids einen zweiten bestimmten Schwellwert Tw unter einer Solltemperatur Tc (85) erreicht, das Kühlfluid in den "Kühler" (3) zu lenken, dann die Temperatur der Kühlflüssigkeit auf die Solltemperatur Tc (88) zu regulieren, wenn die Temperatur des Kühlfluids die Solltemperatur erreicht.

19. Verfahren nach einem der vorhergehenden Ansprüche, **dadurch gekennzeichnet, dass** es im zweiten Modus mit Heizung darin besteht, nach der Kaltstartphase des Motors die Kühlflüssigkeit in den Lufterhitzer (5) zu lenken, wenn die Drehzahl des Motors unter einem bestimmten Schwellwert RPM1 (89) ist, bis die Temperatur der Kühlflüssigkeit einen Schwellwert Ts1 erreicht, der innerhalb eines bestimmten Temperaturbereichs (92) liegt, dann, wenn die Temperatur des Kühlfluids einen zweiten bestimmten Temperaturschwellwert TW unter einer Solltemperatur Tc (94) erreicht, das Kühlfluid in den Zweig "Kühler" (57) zu lenken, dann die Temperatur der Kühlflüssigkeit auf die Solltemperatur Tc (97) zu regulieren, wenn die Temperatur der Kühlflüssigkeit die Solltemperatur Tc erreicht.

20. Verfahren nach einem der vorhergehenden Ansprüche, **dadurch gekennzeichnet, dass** es darin besteht:
- wenn die Drehzahl des Motors über dem bestimmten Schwellwert RPM1 liegt, den Durchsatz der Kühlflüssigkeit im Lufterhitzer (5) zu begrenzen (98) und den Rest des Durchsatzes in den Zweig "Ableitung" (4) zu schicken,
- wenn die Motordrehzahl RPM höher (99) als eine zweite bestimmte Wertschwelle RPM2 ist, die selbst über der ersten Schwelle RPM1 liegt, und wenn die Temperatur der Kühlflüssigkeit einen Wert Ts1 erreicht, der innerhalb eines Bereichs von bestimmten Temperaturwerten liegt (100), dann, wenn die Temperatur des Kühlfluids einen zweiten bestimmten Temperaturschwellwert TW unter einer Solltemperatur Tc (101) erreicht, das Kühlfluid in den "Kühler" (3) zu lenken, dann die Temperatur der Kühlflüssigkeit auf die Solltemperatur Tc (104) zu regulieren, wenn die Temperatur der Kühlflüssigkeit die Solltemperatur Tc erreicht.

21. Verfahren nach einem der vorhergehenden Ansprüche, **dadurch gekennzeichnet, dass** es ein Ventil (2) mit drei Ausgangsstutzen verwendet, einem ersten Ausgangsstutzen (34), der mit dem Ableitungszweig (4) verbunden ist, einem zweiten Ausgangsstutzen (32), der mit dem Kühler (3) verbunden ist, und einem dritten Ausgangsstutzen (36), der mit dem Lufterhitzer verbunden ist, und dass das Einstellorgan (38) des Ventils (2) nacheinander mindestens die folgenden Stellungen einnehmen kann, wenn es in einer gegebenen Richtung in Drehung versetzt wird:
- Stellung "Kühler" P9 oder P10, in der der zweite Ausgangsstutzen (32) offen ist;
- Stellung "Kühler + Ableitung" P2 oder P3, in der der erste Ausgangsstutzen (34) und der zweite Ausgangsstutzen (32) offen sind;
- Stellung "Ableitung" P1, in der der erste Ausgangsstutzen (34) offen ist;
- Stellung "Durchsatz Null" P0, in der kein Ausgangsstutzen offen ist, und in der der maximal im Motor (1) tolerierte Motordurchsatz in der Größenordnung von einigen Litern pro Stunde liegt;
- Stellung "Lufterhitzer" P5' oder P8, in der der dritte Ausgangsstutzen (36) offen ist;
- Stellung "Lufterhitzer + Ableitung" P5, in der der erste Ausgangsstutzen (34) und der dritte Ausgangsstutzen (36) offen sind;
- Stellung "Kühler + Ableitung + Lufterhitzer" P6 oder P7, in der der erste Ausgangsstutzen (32), der zweite Ausgangsstutzen (34) und der dritte Ausgangsstutzen offen sind;
- Stellung "Kühler + Lufterhitzer" P4, in der der zweite Ausgangsstutzen (32) und der dritte Ausgangsstutzen (36) offen sind.

22. Verfahren nach dem vorhergehenden Anspruch, **dadurch gekennzeichnet, dass** das Einstellorgan (38) eine Stellung "Durchsatz Null" einnehmen kann, in der kein Ausgang offen und der Durchsatz im Motor praktisch Null ist.

23. Verfahren nach einem der Ansprüche 21 und 22, **dadurch gekennzeichnet, dass** das Einstellorgan (38) außerdem eine Stellung "Sicherheit" einnehmen kann, die der Stellung "Kühler" entspricht, in der der zweite Ausgang (34) und der dritte Ausgang "Lufterhitzer" (36) offen sind.

24. Verfahren nach einem der Ansprüche 21 bis 23, **dadurch gekennzeichnet, dass** das Einstellorgan (38) außerdem eine Sicherheitsstellung einnehmen kann, die der Stellung "Kühler" entspricht, in der der erste Ausgang (32) offen ist.

25. Verfahren nach einem der Ansprüche 21 bis 24, **dadurch gekennzeichnet, dass** es darin besteht, das Einstellorgan (38):
entweder in eine der Stellungen: "Ableitung", "Kühler + Ableitung", "Kühler" zu bringen, wenn ein Modus ohne Heizung erwünscht ist,
Oder in eine der Stellungen: "Kühler + Lufterhitzer", "Kühler + Ableitung + Lufterhitzer", "Lufterhitzer + Ableitung", "Lufterhitzer" zu bringen, wenn ein Modus mit Heizung erwünscht ist.

26. Verfahren nach einem der Ansprüche 21 bis 25, **dadurch gekennzeichnet, dass** es darin besteht, das Ventil (2) beim Kaltstart des Motors zu schließen, um den Durchsatz im Motorblock (1) auf einen Durchsatz praktisch gleich Null zu begrenzen, und den Durchsatz im Motorblock (1) und im Zweig "Ableitung" (4) wiederherzustellen, wenn die Last oder die Motordrehzahl oder die Temperatur der Kühlflüssigkeit bestimmte Schwellwerte überschreiten.

27. Verfahren nach dem vorhergehenden Anspruch, **dadurch gekennzeichnet, dass** es im Modus "ohne Heizung" darin besteht, nach der Kaltstartphase des Motors den ganzen den Motor durchquerenden Fluiddurchsatz in den Zweig "Ableitung" (4) zu lenken, bis die Kühltemperatur einen bestimmten Temperaturschwellwert TS1 erreicht, der innerhalb eines bestimmten Temperaturwertbereichs (83) liegt, dann, wenn die Temperatur des Kühlfluids einen zweiten bestimmten Schwellwert Tw unter einer Solltemperatur Tc (85) erreicht, die Steuereinrichtungen das Kühlfluid in den "Kühler" (2) lenken, dann die Steuereinrichtungen (48) die Temperatur der Kühlflüssigkeit auf die Solltemperatur Tc (88) regulieren, wenn die Temperatur des Kühlfluids die Solltemperatur erreicht.

28. Verfahren nach einem der Ansprüche 26 und 27, **dadurch gekennzeichnet, dass** es im Modus mit Heizung darin besteht, nach der Kaltstartphase des Motors die Kühlflüssigkeit in den Lufterhitzer zu lenken, wenn die Drehzahl des Motors unter einem bestimmten Schwellwert RPM1 (89) liegt, bis die Temperatur der Kühlflüssigkeit einen Schwellwert Ts1 erreicht, der innerhalb eines Bereichs von bestimmten Temperaturwerten (92) liegt, dann, wenn die Temperatur des Kühlfluids einen zweiten bestimmten Temperaturschwellwert TW unter einer Solltemperatur Tc (94) erreicht, die Steuereinrichtungen (48) das Kühlfluid in den Zweig "Kühler" (57) lenken, dann die Steuereinrichtungen (48) die Temperatur der Kühlflüssigkeit auf die Solltemperatur Tc (97) regulieren, wenn die Temperatur der Kühlflüssigkeit die Solltemperatur Tc erreicht.

29. Verfahren nach dem vorhergehenden Anspruch, **dadurch gekennzeichnet, dass** es darin besteht:
- wenn die Drehzahl des Motors über dem bestimmten Schwellwert RPM1 liegt, den Durchsatz der Kühlflüssigkeit im Lufterhitzer (5) zu begrenzen (98) und den Rest des Durchsatzes in den Zweig "Ableitung" (4) zu schicken,
- wenn die Motordrehzahl RPM höher (99) als eine zweite bestimmte Wertschwelle RPM2 ist, die selbst höher als die erste Schwelle RPM1 ist, und wenn die Temperatur der Kühlflüssigkeit einen Wert Ts1 erreicht, der innerhalb eines Bereichs von bestimmten Temperaturwerten (100) liegt, dann, wenn die Temperatur des Kühlfluids einen zweiten bestimmten Temperaturschwellwert TW unter einer Solltemperatur Tc (101) erreicht, das Kühlfluid in den "Kühler" (3) zu lenken, dann die Temperatur der Kühlflüssigkeit auf die Solltemperatur Tc (104) zu regulieren, wenn die Temperatur der Kühlflüssigkeit die Solltemperatur Tc erreicht.
